(19) Europäisches Patentamt
European Patent Office
Office européen des brevets

(11) EP 4 404 102 A1

(12) EUROPEAN PATENT APPLICATION

(43) Date of publication:
24.07.2024 Bulletin 2024/30

(21) Application number: 23215380.9

(22) Date of filing: 08.12.2023

(51) International Patent Classification (IPC):
G06N 3/063 (2023.01)          G06N 3/0464 (2023.01)

(52) Cooperative Patent Classification (CPC):
G06N 3/0464; G06N 3/063; G06N 3/0455;
G06N 3/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 13.12.2022  GB 202218777
13.12.2022  GB 202218778
13.12.2022  GB 202218779

(71) Applicant: Imagination Technologies Limited
Kings Langley, Hertfordshire WD4 8LZ (GB)

(72) Inventors:
• Imber, James
Hertfordshire, WD4 8LZ (GB)
• Dikici, Cagatay
Hertfordshire, WD4 8LZ (GB)
• Choudhury, Biswarup
Hertfordshire, WD4 8LZ (GB)

(74) Representative: Slingsby Partners LLP
1 Kingsway
London WC2B 6AN (GB)

(54) VARIABLE INPUT SHAPES AT RUNTIME

(57) A method of implementing in hardware a dynamic neural network for operation on an input tensor having a variable dimension, the method comprising: receiving a representation of the dynamic neural network; transforming the representation of the dynamic neural network into a static network adapted to operate on a fixed size input, the static network being adapted to perform operations on the fixed size input which are equivalent to the operations performed by the dynamic neural network on its input tensor; and implementing a plurality of instances of the static network in hardware for operation on an input tensor split into a sequence of overlapping fixed size inputs along its variable dimension, each instance of the static network being arranged to operate on a respective fixed size input of the sequence.

FIGURE 1

EP 4 404 102 A1

**Description**

CROSS-REFERENCE TO RELATED APPLICATION

This application claims priority from UK patent applications 2218777.7, 2218779.3 and 2218778.5 filed on 13 December 2022, which are herein incorporated by reference in their entirety.

BACKGROUND

The present disclosure relates to methods and data processing systems for implementing in hardware a neural network having one or more variable ("dynamic") size inputs.

Hardware for performing neural networks, such as Neural Network Accelerators (NNAs), and their associated software (e.g. drivers, control software), are often able to implement a wide variety of neural networks. For example, NNAs can be used to implement many types of artificial neural networks, including deep neural networks such as convolutional neural networks. Implementing artificial neural networks in such specialised hardware can offer substantially improved performance (e.g. lower power consumption and faster execution) over alternative implementations of neural networks, for example in software running on general-purpose hardware such as CPUs.

Many of the neural network frameworks available for designing neural networks, such as TensorFlow and PyTorch, support dynamic tensors which are variable in size at run time. However, typically the hardware and/or associated software of an NNA is configured to handle networks having predefined, static sizes in order for the hardware implementation of the network to be adapted and optimised for performance. The shapes and sizes of tensors are specified beforehand, so that decisions can be made offline pertaining to the optimal scheduling of operations and allocation of memory for the target hardware. In other words, in order to benefit most from running a neural network on an NNA, the size of the tensors in the network must generally be known prior to implementation of the network in hardware.

SUMMARY

This summary is provided to introduce a selection of concepts that are further described below in the detailed description. This summary is not intended to identify key features or essential features of the claimed subject matter, nor is it intended to be used to limit the scope of the claimed subject matter.

There is provided a method of implementing in hardware a dynamic neural network for operation on an input tensor having a variable dimension, the method comprising:

> receiving a representation of the dynamic neural network;
> transforming the representation of the dynamic neural network into a static network adapted to operate on a fixed size input, the static network being adapted to perform operations on the fixed size input which are equivalent to the operations performed by the dynamic neural network on its input tensor; and
> implementing a plurality of instances of the static network in hardware for operation on an input tensor split into a sequence of overlapping fixed size inputs along its variable dimension, each instance of the static network being arranged to operate on a respective fixed size input of the sequence.

The implementing may include defining a combination operation arranged to combine the output of each instance of the static network so as to provide an output of the dynamic neural network operated on the input tensor.

The defining the combination operation may comprise implementing the combination operation in hardware.

Each of the fixed size inputs of the sequence of overlapping fixed size inputs may be the same size.

The transforming may comprise selecting the size of the overlap between the overlapping fixed size inputs of the sequence in dependence on the receptive field of the first layer of the static network.

The transforming may comprise selecting the size of the fixed size input in dependence on the characteristics of the hardware.

The static network may include the same set of layers as the dynamic neural network, the layers of the dynamic neural network representing the operations performed by the dynamic neural network.

The dynamic neural network may be for operation on an input tensor having a plurality of variable dimensions and the fixed size input is fixed in size in respect of each of the variable dimensions, the plurality of instances of the static network being for operation on an input tensor split along each of variable dimensions into a sequence of overlapping fixed size inputs.

The transforming may comprise selecting the size of the fixed size input and/or the size of the overlap in respect of each of the variable dimensions independently of selecting the size of the fixed size input and/or the size of the overlap in respect of the other variable dimensions of the plurality of variable dimensions.

The transforming may comprise, prior to forming the static network:

> determining whether padding of the layers of the dynamic neural network may be propagated into the input tensor whilst satisfying the receptive field of each layer of the dynamic neural network; and
>
> if the determination is positive, propagating the padding of the layers of the static network into the fixed size input to the static network.

The determination may be performed if the dynamic neural network does not introduce padding between layers of the dynamic network and is otherwise not performed.

The implementing may be performed such that the overlaps of each fixed size input to each of the instances of the static network are shared with the fixed size inputs to adjacent instances of the static network for operation on the sequence of overlapping fixed size inputs, but that inputs to layers of the instances of the static network subsequent to the first layer are not shared with the respective layers of adjacent instances of the static network.

The transforming may comprise:

> defining a head network for operation on the first fixed size input of a sequence of overlapping fixed size inputs, each layer of the head network inheriting the left padding of the corresponding layer of the dynamic neural network, the head network being configured to perform operations on the first fixed size input which are equivalent to the operations performed by the dynamic neural network on its input tensor; and/or
>
> defining a tail network for operation on the last fixed size input of a sequence of overlapping fixed size inputs, each layer of the tail network inheriting the right padding of the dynamic neural network, the tail network being configured to perform operations on the last fixed size input which are equivalent to the operations performed by the dynamic neural network on its input tensor;

and the implementing in hardware comprises:

> implementing an instance of the head network for operation on the first fixed size input of the sequence of overlapping fixed size inputs; and/or
>
> implementing an instance of the tail network for operation on the last fixed size input of the sequence of overlapping fixed size inputs.

The first fixed size input to the instance of the head network and/or the last fixed size input to the instance of the tail network may be different in size to the fixed size input to the plurality of instances of the static network.

A tail network may not be defined if the input tensor represents a streamed input of indeterminate length.

The head and/or tail networks may be defined if the dynamic neural network introduces padding between layers of the dynamic network and otherwise may not be defined.

The implementing may be performed such that, on receiving input data for the instance of the tail network when implemented in the hardware, the input data is padded to achieve the fixed size input for the tail network if the input data is smaller than the fixed size input for the tail network.

The implementing may be performed such that each static network is arranged to operate independently of each other static network.

Each layer of the static network may inherit the padding of the corresponding layer of the dynamic neural network.

There is provided a data processing system for implementing a dynamic neural network for operation on an input tensor having a variable dimension, the system comprising:

> a transformation unit configured to receive a representation of the dynamic neural network and transform the representation into a static network adapted to operate on a fixed size input, the static network being configured to perform operations on the fixed size input which are equivalent to the operations performed by the dynamic neural network on its input tensor;
>
> a hardware accelerator for processing neural networks; and
>
> control logic configured to implement a plurality of instances of the static network at the hardware accelerator for operation on an input tensor split into a sequence of overlapping fixed size inputs along its variable dimension, each instance of the static network being arranged to operate on a respective fixed size input of the sequence.

The control logic may comprise one or more of a driver, firmware and software for configuring the hardware accelerator.

The hardware accelerator and the control logic may be adapted to perform feed-forward neural networks on input tensors of fixed size.

The hardware accelerator and the control logic may be incapable of performing the received representation of the dynamic neural network.

There is provided a method of implementing in hardware a dynamic neural network for operation on an input tensor having a variable dimension, the method comprising:

> receiving a representation of the dynamic neural network;
> identifying static and dynamic subgraphs of the dynamic neural network which collectively represent the operations of the dynamic neural network, the static subgraph comprising one or more layers each arranged to receive an input which is fixed in size;
> transforming the representation of the dynamic neural network by:
>
>> defining a first static network representing the static subgraph;
>> transforming the dynamic subgraph into a second static network adapted to operate on a fixed size input and to perform operations on the fixed size input which are equivalent to the operations performed by the dynamic subgraph on the input tensor; and
>> defining one or more combination operations for combining the outputs from a plurality of the second static networks for provision to the first static network;
>
> implementing in hardware:
>
>> an instance of the first static network; and
>> a plurality of instances of the second static network for operation on an input tensor split into a sequence of overlapping fixed size inputs along its variable dimension, each instance of the second static network being arranged to operate on a respective fixed size input of the sequence;
>
> and
> configuring the combination operations to combine the outputs from the implemented plurality of instances of the second static network for provision to the implemented instance of the first static network.

The identifying may comprise:

> identifying a reduction layer in the dynamic neural network, the dimensions of the output from the reduction layer being independent of the dimensions of the input to that layer;
> defining the dynamic subgraph as one or more layers of the dynamic neural network between the input tensor and up to and including the reduction layer; and
> defining the static subgraph as one or more layers of the dynamic neural network following the reduction layer which receive an input which is fixed in size.

The reduction layer may comprise one or more of a sum reduction, maximum reduction, and mean reduction.

The one or more combination operations may be selected in dependence on the operation(s) performed at the reduction layer.

The one or more combination operations may comprise one or more of: a dynamic elementwise maximum; a dynamic elementwise mean; a Region of Interest (ROI) pooling; a reduction.

The one or more combination operations may be implemented in one or more of hardware, software, and firmware.

The one or more combination operations may be implemented in hardware and comprise one or more of an element-wise maximum reduction tree and an element-wise mean reduction tree arranged to combine the outputs from the plurality of instances of the static network operating on the sequence of fixed size inputs, the output of the reduction tree(s) being arranged to provide a fixed size output for provision to the instance of the first static network.

The identifying static and dynamic subgraphs may comprise identifying a plurality of static subgraphs and/or a plurality of dynamic subgraphs, and the transforming and implementing are performed in respect of each of the plurality of static subgraphs and/or the plurality of dynamic subgraphs.

The method may further comprise operating the plurality of instances of the static network in the hardware on the sequence of overlapping fixed size inputs.

There is provided a data processing system for implementing a dynamic neural network for operation on an input tensor having a variable dimension, the system comprising:

> a transformation unit configured to:

receive the dynamic neural network and identify static and dynamic subgraphs of the dynamic neural network which collectively represent the operations of the dynamic neural network, the static subgraph comprising one or more layers each arranged to receive an input which is fixed in size;
transform the representation of the dynamic neural network by:

defining a first static network representing the static subgraph;
transforming the dynamic subgraph into a second static network adapted to operate on a fixed size input and to perform operations on the fixed size input which are equivalent to the operations performed by the dynamic subgraph on the input tensor; and
defining one or more combination operations for combining the outputs from a plurality of the second static networks for provision to the first static network;

a hardware accelerator for processing neural networks; and
control logic configured to implement at the hardware accelerator:

an instance of the first static network; and
a plurality of instances of the second static network for operation on an input tensor split into a sequence of overlapping fixed size inputs along its variable
dimension, each instance of the second static network being arranged to operate on a respective fixed size input of the sequence;

the control logic being arranged to configure the combination operations to combine the outputs from the implemented plurality of instances of the second static network for provision to the implemented instance of the first static network.

Each layer of the second static network may inherit the padding of the corresponding layer of the dynamic neural network.

The implementing may be performed such that each second static network is arranged to operate independently of each other second static network.

The dynamic neural network may be for performing streamed or online execution of input data that is indeterminate in length. The dynamic neural network may be for applications such as speech recognition, image processing, text processing, or time series forecasting.

There may be provided a data processing system configured to perform any of the methods described herein. There may be provided computer program code for performing a method as described herein. There may be provided non-transitory computer readable storage medium having stored thereon computer readable instructions that, when executed at a computer system, cause the computer system to perform the methods as described herein.

BRIEF DESCRIPTION OF THE DRAWINGS

The present invention is described by way of example with reference to the accompanying drawings. In the drawings:

Figure 1(a) shows an exemplary dynamic neural network operating on a dynamic input and providing a fixed size output.
Figure 1(b) shows the dynamic neural network of Figure 1(a) transformed into a set of static network instances for operation on fixed size inputs into which the dynamic input has been split.
Figure 2(a) shows a simple dynamic neural network having a max pool layer and a convolution layer operating on a dynamic input tensor.
Figure 2(b) shows the dynamic network of Figure 2(a) recast as a set of static network instances so as to enable implementation of the dynamic neural network in hardware.
Figure 2(c) and (d) illustrate propagating the padding of the layers of the dynamic network into the input tensor.
Figure 3 illustrates a dynamic neural network transformed into head, centre and tail networks in accordance with the principles described herein.
Figure 4 shows a data processing system configured to operate in accordance with the principles described herein.
Figure 5 shows head, centre and tail networks operating, respectively, on a head tile, set of centre tiles, and a tail tile.
Figure 6 shows an example of a source neural network for operation on a dynamic input.
Figure 7 illustrates the source neural network of Figure 6 split into dynamic and static subgraphs, with the dynamic subgraph being implemented as a set of static subgraph instances.
Figure 8(a) shows a dynamic neural network split into dynamic and static subgraphs, with combination operations being provided to combine the outputs from a set of instances of a static network representing the dynamic subgraph.

Figure 8(b) shows a dynamic neural network split into dynamic and static subgraphs, with a reduction tree of combination operations being provided to combine the outputs from a set of instances of a static network representing the dynamic subgraph.

Figure 9 illustrates transforming a dynamic neural network into a set of static network instances in two dimensions.

Figure 10 illustrates transforming a dynamic neural network into a set of static network instances using a tiling approach in two dimensions.

Figure 11 shows a sequence of three instances of a static centre network in which the tiling approach is used.

Figure 12 is a flowchart illustrating an exemplary set of steps for transforming a source neural network in accordance with the described principles into a set of static instances suitable for implementation in hardware.

Figure 13 is a flowchart illustrating the approach of splitting a dynamic network into dynamic and static subgraphs for implementation in hardware.

Figure 14(a) is a flowchart illustrating a tiling approach to implementing a dynamic network in hardware.

Figure 14(b) is a flowchart illustrating the calculation of input tile size for a static network according to the tiling approach of Figure 14(a).

Figure 15 illustrates a masking approach which enables a single static network to be defined which can receive a variable length portion of a dynamic input.

Figures 16(a) to (c) illustrates three different input masks for the static network shown in Figure 15.

Figure 17 is a flowchart illustrating an exemplary approach to implementing a dynamic network in hardware using masking in the tail tile.

Figure 18 shows a computer system comprising a neural network accelerator configured to implement a dynamic neural network in accordance with the principles described herein.

Figure 19 is a schematic diagram of an integrated circuit manufacturing system.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art. Embodiments are described by way of example only.

The sets of values in a neural network (e.g. its inputs, outputs and intermediate values between layers) may have constant (static) dimensions or variable (dynamic) dimensions. Typically each set of values in a neural network is referred to as a tensor. A static tensor is a tensor whose dimensions are all fixed. A dynamic tensor is a tensor having one or more variable dimensions. The variable dimensions may be spatial (e.g. a width or height). Note that the NHWC format is used herein to describe exemplary tensors: i.e. the dimensions of a tensor are given as a Number of samples (N) x Height (H) x Width (W) x Channels (C), or (N, H, W, C).

Most neural network operations have the property that a dynamic tensor (or shape) on the input results in a dynamic tensor (shape) on the output - i.e. the dimensions of the output tensor depend on the dimensions of the input tensor. The dimensions of the output tensor can be inferred from the operation and the input dimensions. For example, performing the following operations on an input tensor of dimensions (10, 16, x, 32) yields an output tensor as set out below:

- a 3x3 convolution with a stride of 1 and padding of 1 results in an output tensor of the same dimensions;
- a 5x5 convolution with a stride of 1 and padding of 1 results in an output tensor of dimensions (10, 14, x-2, 32);
- a 4x4 max pool with a stride of 4 and padding of 0 results in an output tensor of dimensions (10, 4, x/4, 32).

Note that in the above examples the spatial height and width dimensions are modified. More generally the principles described herein may be extended to modify any dimensions of a tensor, as appropriate to the operations being performed.

Generally, the dimensions of a dynamic input tensor will only be known at run time, that is, after the neural network has been implemented in hardware. In some applications of a neural network, the size of a dynamic input tensor may not even be known at runtime - this is often referred to as "streamed" or "online" execution. For example, a neural network may be configured to identify spoken commands in an audio stream while the speaker is still speaking. In this example, it is not known when the network begins processing the audio stream when the stream will end. The input tensor represented by the audio stream is therefore undefined in length. In a further example, a neural network for an autonomous vehicle may classify the actions of pedestrians over time using a convolutional neural network operating over a video input of indefinite duration. In a further example, the neural network is for processing text inputs of indeterminate length - e.g. the length of a sentence (in terms of number of words or embeddings) may differ from sentence to sentence. In a further example, the neural network may be for performing image processing on images of variable spatial resolution (e.g. to perform object detection or semantic segmentation). The principles described herein may be applied to such streaming execution neural networks.

In order to benefit most from running a neural network in specialised hardware, it is generally necessary for the complete neural network, including the sizes of tensors, to be known at the point the network is transformed for implementation in hardware, so as to enable the network to be optimised for the characteristics of the hardware available. Typically the neural network is transformed in software, e.g. at an offline compiler for the neural network accelerator.

Handling dynamic input tensors

Approaches will now be described which permit neural networks (or parts of neural networks) having input tensors with at least one variable dimension to be implemented in hardware. Typically the variable dimension(s) will be spatial dimension(s).

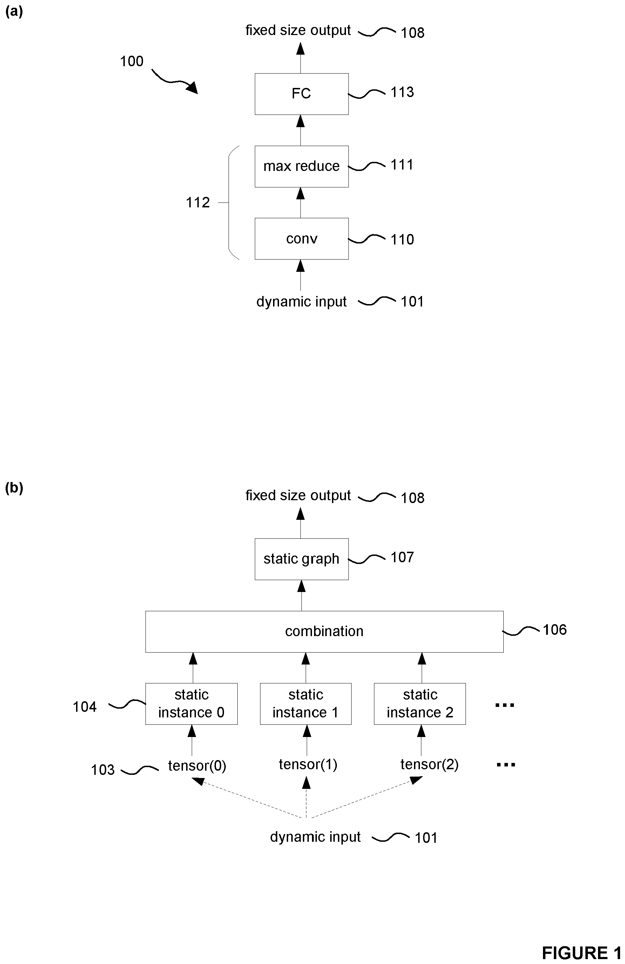

With reference to Figure 1(a), consider a dynamic input tensor 101 to a source neural network 100, the input tensor having one or more variable dimensions. In this simple example, the neural network comprises three layers: a convolution layer 110, a maximum reduction (also referred to as "max reduction" or "max reduce" herein) layer 111 operating over the variable dimension(s), and a fully connected layer 113. In the example shown in Figure 1(a), the convolution and max reduction layers together represent a dynamic subgraph 112 since they operate on an input which is dynamic (variable in size). In some examples, a dynamic subgraph is considered to be a subgraph with both a dynamic input and a dynamic output; in such examples, the dynamic subgraph 112 would not include max reduction layer 111 since the output of the max reduction layer is fixed in size. The fully connected layer 113 represents a static subgraph since its input and its output (the output of the neural network 108) are fixed in size, by virtue of the preceding max reduction layer's reduction of the variable dimension(s) to a fixed size of 1.

Figure 1(b) illustrates splitting the dynamic subgraph 112 of the network in accordance with the principles described in more detail below. The dynamic input tensor 101 is split into a set of static tensors 103. This enables a static neural network to be defined once and used for operation on each of the static tensors, with each instance of the static network 104 being arranged to perform the same set of operations as the dynamic subgraph 112 of the source network - in this case a convolution 110 and max reduction 111. Since each of the neural network instances 104 operates on a static tensor, they may be implemented in hardware according to existing transformation and optimisation techniques.

In the example shown in Figure 1, the dynamic input tensor may be variable in one or more dimensions. The dynamic subgraph 112 of the source neural network 100 which is to operate on the dynamic input 101 is implemented as a set of static subgraphs or network instances 104, each of which is configured to perform the same set of operations as the dynamic subgraph 112 of the source neural network. In this manner the set of static network instances 104 operating on their respective static inputs 103 can be equivalent to the operation of the dynamic subgraph 112 of the source neural network on the dynamic input tensor 101. However, to ensure equivalence, it is necessary to consider the characteristics of the operations being performed by the layers of the neural network and the properties of those layers (e.g. padding, stride length, etc.). This is discussed in more detail below.

In Figure 1(b), the dynamic input tensor is shown as being split into three static tensors, but in general the input tensor may be split into any number of tensors, according to the size of the input tensor and the fixed size selected for the static tensors. For streamed dynamic inputs of indeterminate length, the dynamic input may be split into an indeterminate number of static tensors. Typically, the static tensors on which the subgraphs operate represent overlapping portions of the dynamic input tensor. A suitable means of combining the outputs of each of the static subgraph instances 104 is used to obtain the output of the dynamic subgraph 112. In this example, a combination operation 106 is introduced to combine the outputs from the network instances 104 into a single fixed size input for provision to the static graph 107, which in this example is equivalent to the fully connected layer 113 of Figure 1(a). Examples of suitable combination operations 106 are discussed below.

Often, neural networks for operation on a dynamic input include a reduction layer which has the property that the tensors output from the reduction layer are fixed in size - i.e. they are static tensors. Since the layers of a network subsequent to a reduction layer receive static tensors, such layers need not be included in the (static) subgraph whose instances 104 operate on the split static inputs 103 in order to implement the dynamic part(s) of the source network. In other words, the static parts of a network (those layers of a network receiving and outputting static tensors) may be separated from the dynamic parts of a network (those layers which receive dynamic tensors). As is shown in Figure 1(b) and described in further detail below, the static parts of the source network (represented by the static graph 107) may be performed without modification. The output 108 of the network performed in Figure 1(b) is the same as the output of the source network shown in Figure 1(a) operated on the dynamic input 101. However, unlike the network shown in Figure 1(a), the network shown in Figure 1(b) is suitable for implementation in hardware adapted to operate on fixed size tensors. For example, each static instance 104 may be implemented at a Neural Network Accelerator (NNA) for execution on its respective fixed size tensor 103, and the static graph 107 may be implemented at the NNA for execution on the combination 106 of the outputs from the static instances 104.

In general, a reduction operation may be any kind of operation for which the dimensions of the output tensor are independent of the dimensions of the input tensor. Multiple reduction operations, or a single reduction operation operating over multiple dimensions, may be necessary in examples where a neural network is for operation on input tensors having multiple variable dimensions. Examples of reduction operations include sum reductions and max reductions, which reduce the size of one or more specified dimensions to 1 by applying a reduction operation (e.g. a summation or maximum, as appropriate) to the elements of the specified dimension(s). Reduction operations are common examples of operations that take a dynamic input tensor and output a static tensor, but other examples will be apparent to those skilled in the art, and networks containing them may also be handled according to the principles described herein.

Dynamic operations may be considered to be those operations of a neural network which yield output tensors having dimensions which are a function of the dimensions of the tensor input to the operation (that is, the output dimensions vary with the input dimensions). In neural networks adapted to operate on a dynamic input, a static part of the neural network may be considered to be a subgraph operating on and outputting static tensors (e.g. layers following a reduction layer in a dynamic neural network), and a dynamic part of the neural network being a subgraph that operates on dynamic tensors (e.g. layers preceding and including the reduction layer(s)).

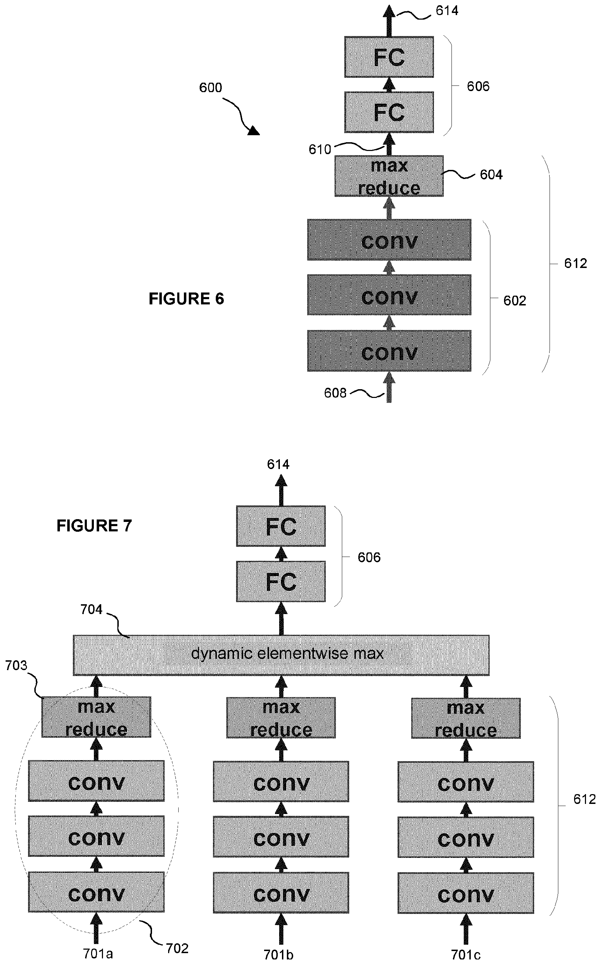

Another example of a "source" neural network for operation on a dynamic input is illustrated in Figure 6. The neural network includes a set of convolution layers 602 which operate in turn on a dynamic input 608. A maximum reduction layer 604 operates on the output of the convolution layers so as to provide a static tensor input 610 to a set of fully connected layers 606. The output of the fully connected layers is the output 614 of the network.

Implementing the network of Figure 6 according to the principles shown in Figure 1(b) would result in the convolution layers 602 being implemented as each of the subgraphs 104, and the fully connected layers 606 would be implemented as the static graph 107. The convolution layers 602 and the maximum reduction layer 604 are the dynamic part of the network shown in Figure 6 and the fully connected layers 606 are the static part of the network. In more complex examples, there may be multiple reduction layers and/or branching parts to the neural network but such networks can be similarly implemented by separating dynamic and static parts, with dynamic parts of the network being implemented as a set of static network instances operating on fixed length portions of the dynamic input.

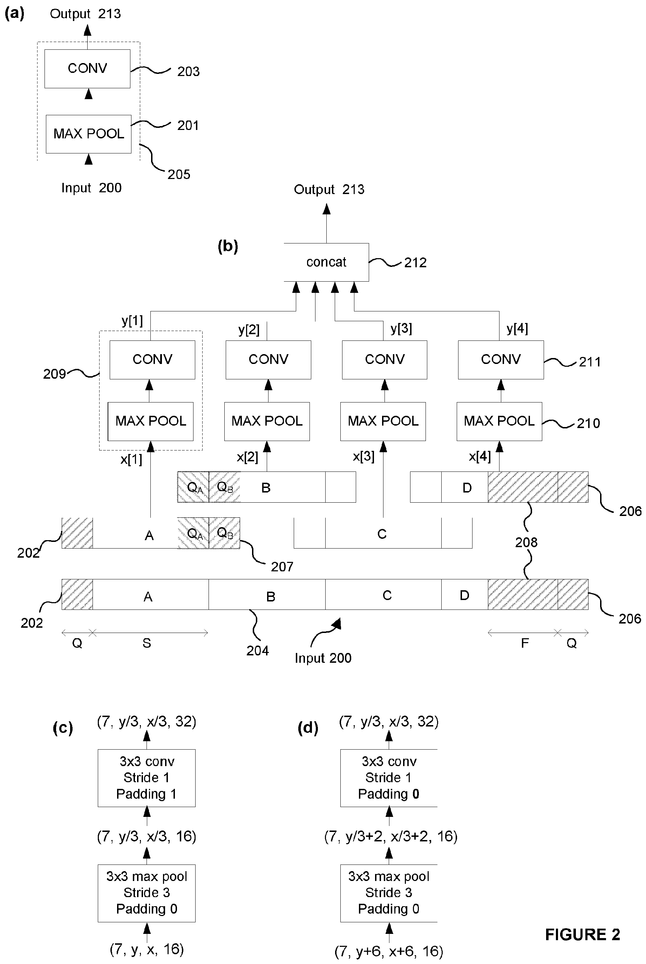

The splitting up of a dynamic input 200 so as to enable implementation of a dynamic neural network 205 in hardware is shown by way of example in more detail in Figure 2. Figure 2(a) shows a simple "dynamic" neural network which comprises max pool layer 201 and convolution layer 203 operating on a dynamic input tensor 200 with one variable dimension so as to form an output 213.

Figure 2(b) shows the dynamic network of Figure 2(a) recast as a set of static network instances 209 so as to enable implementation of the dynamic neural network in hardware. The input 200 is split into a set of fixed size portions 204 of length S. Four such portions A-D are shown in the figure, corresponding to inputs x[1] to x[4] to a set of static network instances 209 that each comprise a max pool layer 210 and a convolution layer 211 configured to perform the same operations as the source dynamic network 201, but on the static inputs x[1] to x[4] rather than the dynamic input 200. In the figure, four fixed size portions are required to represent the dynamic input 200. In other examples different numbers of fixed size portions 204 may be required, depending on the size of the input 200 and on the length S.

The fixed size portions 204 may be provided with padding and/or overlap as appropriate to the neural network being implemented. Typically, some network layers will require padding of input tensors at the beginning and end of the variable dimension - i.e. padding 202 at the first fixed size portion and padding 206 at the last fixed size portion. The properties (e.g. padding) of each layer of a network instance is inherited from the corresponding layer of the source neural network which is received for implementation in hardware. However, in order to avoid dealing with the padding at each layer of the network, it can be advantageous to eliminate the padding from the operations of the network instances 209 and move the padding into the input tensor. This can be performed where moving the padding to the input tensor does not affect the output of the network operations.

Typically, some network layers will require an internal overlap between input tensors to that layer so as to achieve the necessary receptive field. The receptive field of a neural network layer is the size of the input required to generate a single output. This is illustrated in Figure 2 in which an overlap Q 207 is provided between each adjacent pair of fixed size portions so as to ensure that the size of the inputs to each layer of the static networks (in this case max pool and convolution layers 210 and 211) corresponds to the receptive fields of those layers. The size of the overlap Q thus depends on the characteristics of the operations of the neural network. In the example shown in Figure 2, the padding and overlap are the same size Q, but generally this need not be the case.

To ensure that the output from the set of static network instances 209 is equivalent to the output of the source network 205, the overlaps Q between the input portions A-D are the corresponding section of length Q of the adjacent input portion, as is illustrated in Figure 2. For example, the values of overlap portion $Q_B$ of input portion A are the values $Q_B$ at the start of the adjacent input portion B, and the values of overlap $Q_A$ of input portion B are the values $Q_A$ at the end of the adjacent input portion A.

As an example, consider the case where the max pool layer 210 performs a 3x3 max pool operation with a stride of 3 and padding 0, and the convolution layer 211 performs a 3x3 convolution operation with a stride of 1 and padding 1. This is illustrated in Figure 2(c) for an exemplary fixed size portion (7, y, x, 16), with x and y representing the spatial dimensions of the tensor. In Figure 2(d), the padding of the 3x3 convolution layer is moved into the input tensor (i.e. the padding of the convolution layer is set to 0) whilst satisfying the receptive field of each layer by adding an overlap of Q = 3 either side of the fixed size input portion (i.e. for a total additional input tensor size of 6). It will be appreciated from Figures 2(c) and (d) that the same output tensor is generated by the two networks.

According to the present approach, padding is eliminated from network operations and moved to the input tensor (200 in the present example). This is possible in the example shown in Figure 2 because adding three padding values (e.g. three zeros) at the beginning and end of the input to the 3x3 max pool layer results in - following operation of the max pool on the input and because the 3x3 windows do not overlap - a single padding value either side of the input to the 3x3 convolution layer, which is correct. In cases where it is possible to do so, this technique of moving padding to inputs may be preferred due to its simplicity relative to the more general methods described below.

In the example shown in Figure 2, the padding required at the layers of the network 205 is symmetrical (i.e. the left padding 202 is the same as the right padding 206). More generally, the padding required by one or more layers may be asymmetrical, e.g. depending on the attributes of the neural network layers.

In order to achieve the required size for each portion, it is generally necessary to add padding data to the input 200:

- padding data F 208 is added to make the length of the input 200 up to the next multiple of S;
- padding Q 202 and 206 is added to the start and end of the input 200 , which may be done to account for padding eliminated from the layers of the "source" network, as described above.

The padding data may be any suitable padding data appropriate to the operations being performed. The length of padding data F required will depend on the size of the input 200 and the fixed length S.

In the manner described, fixed-length portions A-D may be formed with the appropriate padding data which, including their respective overlaps Q 207, satisfy the receptive field of the network instances 209.

The outputs y[1] to y[4] of the convolution operations performed by the networks 210 on the fixed size input portions 204 may be combined (in the present example, concatenated) 212 so as to produce an output 213 equivalent to the output of the dynamic network 205 operating on input 200.

In the example shown in Figure 2, the left padding 202, right padding 206 and the overlap 207 are all of length Q. Each of the network instances 209 are therefore identical, allowing the dynamic network 205 to be transformed for execution on the NNA once as a static network, and applied multiple times as instances 209: once for each of the fixed size portions 204. Thus, in order to implement dynamic network 205 in hardware, a single static network can be defined for operation as instances 209 on input portions 204 of fixed size S with an overlap Q. In general, the left and right padding required at the input to the network, and the overlap between input portions, may each differ in length as is appropriate to the properties of the layers of the network.

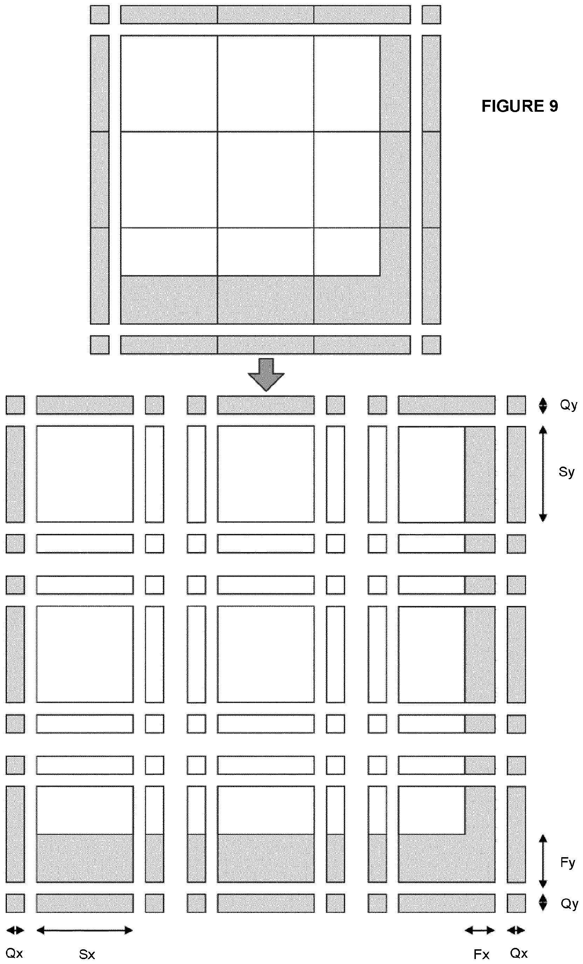

This approach can be extended readily to dynamic inputs with more than one variable dimension as illustrated in Figure 9. In the figure, an input tensor having two variable dimensions $x$ and $y$ is shown divided into portions of size $S_x$ in the $x$ direction with padding $F_x$ and overlap $Q_x$, and portions of size $S_y$ in the y direction with padding $F_y$ and overlap $Q_y$. Again in this example, for each of the $x$ and $y$ directions, the internal overlap $Q_x/Q_y$ is the same size as the left and right padding required for the network input.

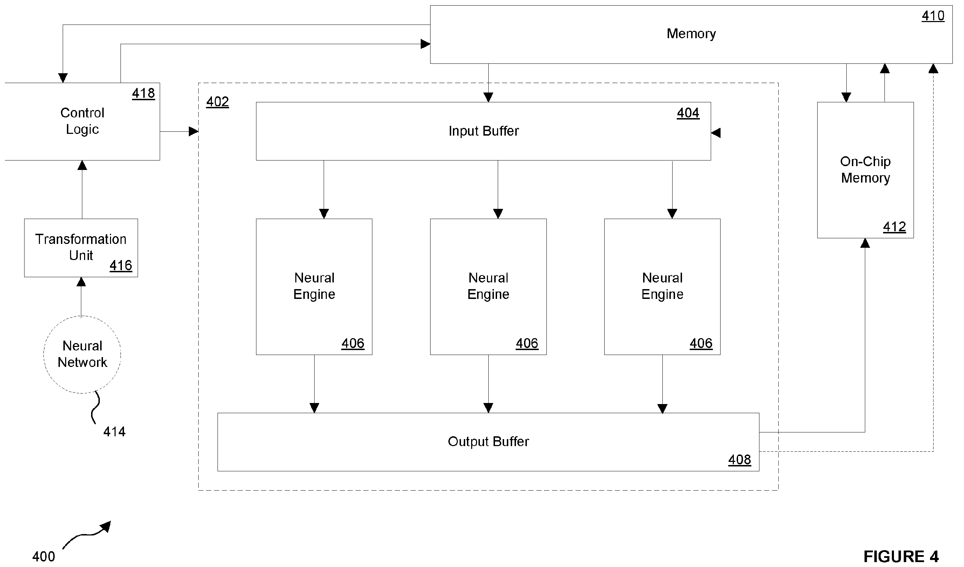

Figure 4 shows a data processing system 400 for implementing a neural network 414. The data processing system comprises an accelerator 402 which is adapted to perform the tensor operations of a neural network. The accelerator may be referred to as a Neural Network Accelerator (NNA). The accelerator 402 may be adapted to perform feed-forward neural networks. For example, the accelerator may comprise a plurality of configurable resources which enable different kinds of feed-forward neural network, such as convolutional neural networks and multi-layer perceptrons, to be implemented at the accelerator. The accelerator 402 (as configured by control logic 418) may be incapable of natively executing a dynamic neural network. For example, in order to implement a neural network at the accelerator it may be necessary to know the size of the inputs to the network (i.e. the inputs cannot be dynamic in size) such that appropriate resources may be allocated and the hardware operations may be defined ahead of implementing the neural network at the accelerator. Typically, neural network accelerators are not capable of operating on dynamic inputs whose size is not known until runtime.

The implementation of a neural network in hardware will be described with respect to the data processing system shown by way of example in Figure 4 in which the accelerator 402 includes a plurality of neural engines 406. It will be understood that the principles described herein for implementing a neural network in hardware are generally applicable to any data processing system comprising a processor capable of performing the tensor operations of a neural network.

In Figure 4, the accelerator includes an input buffer 404, a plurality of neural engines 406, and an output buffer 408. Three neural engines are shown in Figure 4 but in general there may be any number. Each neural engine may receive data tensors, weights and other parameters from the input buffer 404. By combining the weights and data tensors the neural engines are operable to perform the tensor operations of a neural network.

In general, the neural engines 406 may comprise any suitable tensor-processing hardware. The neural engines of the accelerator may be independent processing subsystems of the accelerator which can operate in parallel. For instance, in some examples the accelerator may comprise pooling units (e.g. for implementing max-pooling and average-pooling operations), or element processing units for performing per-element mathematical operations (e.g. adding two tensors together). Such units are not shown in Figure 4 for simplicity. In some examples, multiple of such units (e.g. a chain of convolution, activation and pooling) may be used in a single hardware pass of the neural engine, for example using pipelined processing.

A large number of hardware operations must typically be performed at an accelerator in order to execute each tensor operation of a neural network. This is because data tensors and weight tensors are often very large - particularly in the case of convolution operations. It may therefore take more than one hardware pass of a neural engine to generate a complete output for a given operation of a network (e.g. because a neural engine receives and processes only a portion of the data it requires to perform the operation). In some implementations, different neural engines might perform different passes of a given operation of a neural network, and in other implementations, the neural engines may perform different parts of the same pass of a given operation of a neural network.

The input buffer 404 is arranged to hold input data required by the accelerator, such as input tensors, weights, biases, and other coefficients. The input buffer may include some or all of the input data relating to the one or more operations being performed at the accelerator on a given hardware pass. The input and output buffers of the accelerator shown in Figure 4 may be implemented in any suitable manner - e.g. as any number of data stores which are local to the accelerator (e.g. on the same semiconductor die and/or provided within the same integrated circuit package) or accessible to the accelerator over a data bus or other interconnect.

A memory 410 may be accessible to the accelerator - e.g. the memory may be a system memory accessible to the accelerator over a data bus. An on-chip memory 412 may be provided for storing data associated with the operations performed at the accelerator - such as input and/or output tensors, and/or other data. The on-chip memory may be local to the accelerator (e.g. provided on the same semiconductor die and/or in the same integrated circuit package) such that the data stored in the on-chip memory may be accessed by the accelerator without consuming memory bandwidth to the memory 410 (e.g. a system memory accessible over a system bus). Data (e.g. weights, input data) may be periodically written into the on-chip memory from memory 410. The input buffer 404 may be configured to receive data from the on-chip memory 412 so as to reduce the bandwidth between the memory and the input buffer.

The memory may be coupled to the input buffer and/or the on-chip memory so as to provide input data to the accelerator.

The various exemplary connections are shown separately in the example of Figure 4, but, in some embodiments, some or all of them may be provided by one or more shared data bus connections. It should also be understood that other connections may be provided, as an alternative to, or in addition to, those illustrated in Figure 4. For example, the output buffer 408 may be coupled to the memory 410, for providing output data directly to the memory. Likewise, in some examples, not all of the connections illustrated in Figure 4 may be necessary. For example, the memory 410 need not be coupled to the input buffer 404 which may obtain input data directly from an input data source - e.g. an audio subsystem configured to sample the signal from a microphone dedicated to capturing speech from a user of a device comprising the data processing system. In some examples, a sensor (e.g. microphone) output may be streamed directly to a memory 410 or on-chip memory 412 accessible to the NNA. Such a streamed input would represent a dynamic input of variable and potentially indeterminate length.

Figure 4 further includes a transformation unit 416 and control logic 418 which may be implemented in any suitable manner. In some examples, the transformation unit and/or control logic are implemented in software - e.g. at a compiler and/or a driver of the accelerator. In some examples, the transformation unit and/or control logic are implemented in firmware and/or programmable or fixed function hardware. In general, the transformation unit and/or control logic may be implemented in one or more of software, firmware and hardware. Note that a transformation of a source network as described herein may be achieved by defining a new network (or networks) adapted to perform equivalent operations on a fixed length tensor (or tensors). The new network(s) may be defined in dependence on characteristics of the source network (e.g. its padding, overlap size, etc.)

The control logic 418 is configured to, at run time, implement at the hardware accelerator 402 one or more instances of a static neural network derived from the source neural network 414 at the transformation unit 416. The control logic configures the neural engines 406 of the accelerator to perform the tensor operations of the static subgraph instances of the transformed neural network, e.g. by setting the appropriate accelerator parameters, defining appropriate data structures at the memory 410 and on-chip memory 412, and passing references to those data structures to the accelerator along with the instructions defining the tensor operations to be executed. The control logic may be configured to synchronise the provision of input data to the neural engines of the accelerator.

Dynamic inputs received for processing at the neural network (e.g. received at the memory 410) are split into fixed size portions in accordance with the principles described herein for provision to the instances of the static subgraph generated for the neural network at the transformation unit. The control logic is configured to cause each dynamic input received for processing at the neural network to be split into fixed size portions for processing at the static subgraph instances executing at the neural engines. For example, the control logic may receive the dynamic inputs and process them in software so as to generate the fixed size portions. In some examples, the dynamic inputs are processed at the hardware so as to generate the fixed size portions - e.g. by a firmware agent of the control logic or fixed function control hardware at the accelerator. The fixed size portions may be stored at the input buffer 404 for consumption by the static subgraph instances running at the neural engines. Preferably each fixed size portion is provided at the input buffer with any overlap and padding data required by its respective static subgraph instance.

The control logic 418 may comprise one or more of: software (e.g. an application or a driver) executing at a processor of the data processing system 400 (e.g. a CPU); firmware (e.g. at the accelerator 402 itself); a dedicated processor such as may be implemented in a system on chip (SoC) at or coupled to accelerator 402; or fixed-function control hardware. In some examples, the control logic may comprise a driver running at a general purpose processor of the data processing system and firmware running at an SoC of the accelerator 402. Typically the accelerator will comprise on-device registers that configure aspects of the operations performed by the accelerator and the control logic will set these registers in order to appropriately configure the accelerator to implement a given neural network.

The control at runtime of the hardware implementation of the neural network - e.g. controlling the splitting of the dynamic input into fixed size portions and controlling the scheduling of the instances of the static graph - may be handled in the control logic. In some examples, the control logic 418 may comprise control hardware and associated registers of the neural network accelerator 402, its drivers and firmware, and any application code (e.g. running at a host CPU coupled to the NNA) that, for example, defines memory locations at which sources of data are to be found.

The transformation unit 416 is configured to, at design time, transform a source neural network 414 which is to be implemented in hardware at the accelerator 402. The source neural network 414 may be defined in any suitable manner, e.g. using a deep learning framework such as PyTorch or TensorFlow. The transformation unit may be configured to convert a source neural network into an executable format suitable for execution at the NNA 402. The transformation unit is configured to process the neural network so as to identify static and dynamic parts of the network, and at least to convert the dynamic layers of the network into a corresponding static neural network, instances of which may be applied by the control logic 418 to fixed length portions of an input to the neural network. This is achieved by modifying layers of the source network which are configured to operate on dynamic inputs so that those layers perform the same operations but operate on a fixed size portion of the dynamic input to the source network - the layers thereby become static operations which can be implemented in hardware.

The transformation unit may be configured to select appropriate fixed portion sizes into which a dynamic input is split - e.g. in accordance with the tiling approach described herein. The transformation unit may further be configured to, in dependence on the characteristics of the source neural network, select appropriate overlaps and padding for each layer of the static network - for example, in accordance with the tiling approach described herein.

For example, as has been described with respect to Figure 1, the transformation unit 416 may be configured to transform the neural network 100 shown in Figure 1(a) into a static subgraph 104 corresponding to the dynamic section 112 of the network, and a static graph 107 embodying the fully connected layer 113. Multiple instances 104 of the static subgraph corresponding to the dynamic section 112, and a single instance of the fully connected layer 113, are executed at the accelerator 402 by the control logic 418, resulting in the neural network shown in Figure 1(b) being implemented at the accelerator 402. In an additional example, as has been described with respect to Figure 2, the transformation unit 416 may be configured to transform the neural network of Figure 2(a) into a network instance 209 for implementation at the accelerator 402 by the control logic 418 as the neural network shown in Figure 2(b) which comprises a set of the static network instances 209.

Various approaches may be used to select an appropriate size for the fixed size portions (and any overlap between those portions) into which the input tensor is divided and on which each of the static subgraphs operate. One such tiling approach is described below. In some examples, the size for the fixed size portions and any overlap is determined by a user at design time and provided to the transformation unit as parameter(s) of the transformation process. Various approaches may be used to ensure that padding at the layers of the source network is correctly handled in the transformed network in which the dynamic layers are implemented as a set of static subgraphs operating on each of the fixed size data portions of the input. One such approach will now be described.

## Handling padding in the network

The approach described with respect to Figure 2 of propagating padding to the beginning of the network (e.g. into the input tensor) works for certain networks, including those which do not require any internal padding at the layers of the network. More generally this approach does not hold. For example, it is impossible to move the padding to the beginning of the network in cases where the window size of a windowed operation, such as a convolution, is greater than the stride since the padding values will not be propagated unchanged to internal layers. An approach is therefore required which can handle padding at the network layers more generally.

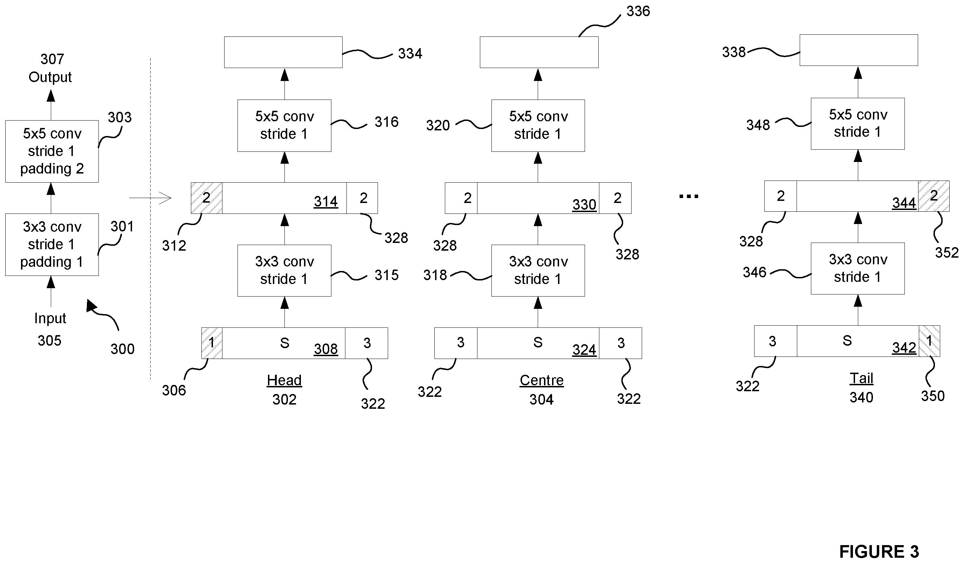

Figure 3 shows a more complex network 300 comprising a 3x3 convolution layer 301 followed by a 5x5 convolution layer 303. Layer 301 has a padding of 1 and layer 303 a padding of 2. The dynamic input 305 is split into a sequence of fixed size portions of length S - the first two portions 308 and 324 are shown in the Figure. For the "central" network portions which are not first or last in the sequence, such as 324, no padding is required, and instead an appropriate overlap is used so as to satisfy the receptive field of the network, in the same manner as has been described with respect to Figure 2. This is shown in the centre network 304, with the fixed size input portion 324 having an overlap 322 of Q = 3 (i.e. 3 units of overlap) either side of its fixed size input of length S. The 3x3 convolution layer 318, on operating on the input 324, consumes a unit of overlap to output a fixed size tensor 330 having two units of overlap 328. On operating on tensor 330, the 5x5 convolution layer 320 consumes the two units of overlap so as to provide a fixed size output 336. The values of the overlaps between input portions are the values of the corresponding part of the adjacent input portion: e.g. the overlap 322 of head input 302 is the first three units of the centre input 304, and the overlap 322 of centre input 304 is the last three units of the head input 302. The centre network 304 may be repeated as many times as necessary to operate on the fixed portions 324 into which the dynamic input 305 is divided.

Note that in this example, the overlaps 328 conjoined with the fixed size tensor 330 are derived entirely from the input to the instance of the preceding convolution layer 318 (i.e. the corresponding overlaps 322 and the fixed size input portion 324), rather than being obtained from the corresponding region of the adjacent tensors, e.g. tensor 314 of the head network and tensor 330 of the subsequent instance of the centre network. This is in contrast to the tiling approach described below. Only the overlaps of the input tensors 308, 324, 342 to the head, centre and tail networks 302, 304, 340 are obtained from the corresponding regions of the adjacent tensors: e.g. the left overlap 322 of tensor 324 may be the last three units of head input tensor 308, and the right overlap 322 of tensor 324 may be the first three units of the input tensor 324 to the next instance of the centre network 304.

The different padding requirements of each layer of the network 300 can be handled by defining a different "head" network 302 for operation on the first fixed size portion 308 of the sequence. The right hand side of the first portion 308 shares the same overlap 322 as the central network portions, but the left hand side of the first portion 308 receives one unit of padding 306 ("left padding") as required by the 3x3 convolution layer 315. Similarly, the right hand side of the intermediate portion 314 handles the overlap 328 in the same way as the intermediate central network portions, but the left hand side of the intermediate portion 314 receives two units of padding 312 ("left padding") as required by the 5x5 convolution layer 316. The padding values may be any values appropriate to the operation being performed at that layer (e.g. zeros for a convolution layer). Thus, whilst the operations performed by the head network 302 are the same as those performed by the centre network 304 (and indeed those of the dynamic network 300), the networks differ slightly because of the different sizes of input tensor on which the networks operate, and the specialised handling of padding by the head network. The output of the head network is in this example output 334.

In some cases, in order to satisfy the padding requirements of the layers of the network a further "tail" network 340 is required to operate on a final fixed size portion 342 of the input 305. As described above with respect to Figure 2, the final input may require data padding (e.g. padding F in Figure 2) in order to make the length of the input 342 up to the same fixed size S as head and centre portions 308 and 324. Like the head network, the tail network performs the same operations as the centre network, but the tail network is different because of the different sizes of data tensor at one or more of its layers. In the example shown in Figure 3, the left hand side of the last input portion to the 3x3 convolution layer handles the overlap 322 in the same way as the central network portions, but the right hand side of the last portion would receive one unit of padding 350 ("right padding") as required by the 3x3 convolution layer. Similarly, the left hand side of the last input portion to the 5x5 convolution layer would share the same overlap 328 as the central network portions 330, but the right hand side of the last input portion to the 5x5 convolution layer would receive two units 352 of padding ("right padding") as required by that layer. The padding values may be any values appropriate to the operation being performed at that layer (e.g. zeros for a convolution layer). The output of the tail network is in this example output 338. In some examples, the tail network might not be required when operating on an input of indefinite size.

In this manner, when a source network 300 is implemented as a set of fixed size networks, the internal padding of the source network is handled at its head and (optionally) tail networks defined to operate on the first and last fixed-size portions of the input to the network. When implemented for operation on an input 305, the head and tail networks are typically executed once and the centre network is executed zero or more times, depending on the length of the input 305.

In some examples, the input lengths to the head and/or tail networks may differ to the input length to the centre network: i.e. in Figure 3, head input 308 and/or tail input 342 may not be of length S and could be of any appropriate length. This does not significantly alter the complexity of implementing a dynamic network as a set of static networks since the head and tail networks 302 and 340 may in any case be different networks to the repeating centre network 304.

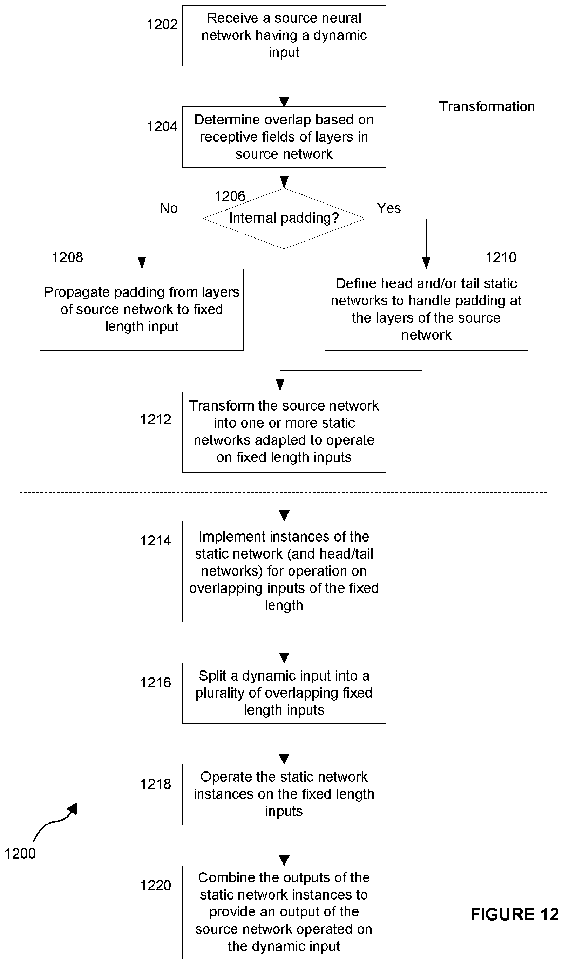

Figure 12 is a flowchart 1200 illustrating an exemplary set of steps for transforming a source neural network in accordance with the described principles into a set of static instances suitable for implementation in hardware. A source neural network is received at 1202 (e.g. network 205 in Figure 2) and a set of transformation steps 1204 to 1212 are performed on the network (e.g. by transformation unit 416) so as to generate the static network(s). For clarity, in this example, it is assumed that the source neural network in its entirety is treated as a dynamic network, but the same principles could be applied to a dynamic sub-graph that outputs to a static sub-graph in a source network (for a discussion of dynamic and static sub-graphs, refer to the section "Splitting static and dynamic graphs" below).

Each layer of the source network has a receptive field which is the size of the input (i.e. the number of adjacent input samples in a given dimension) required to produce a single output sample. At 1204 the receptive field of each layer of the source network is used to determine the overlap (e.g. 322, 328 in Figure 3) required at the input to that layer to ensure that each layer is provided with the correct size of input. For example, given the receptive field of layer 320, an overlap 328 is determined to be required.

For a given fixed length input, there is typically some choice in defining the sizes of tensors on which each layer of the static network is adapted to operate. Such design choices may be made in any suitable manner as will be understood by a person skilled in the art of neural network design - for example, the sizes and shapes of the fixed length inputs of layers of the static network may be defined in dependence on characteristics of the hardware (e.g. to maximise utilisation of the neural engines 406). In some examples, the size of the fixed length input to the static network may be selected - e.g. to optimise performance of the static networks when implemented at the accelerator 402.

As has been described with reference to Figure 2, in some examples in which no internal padding is introduced between the layers of the source network, it is possible to propagate 1208 padding from the layers of the source network through to the fixed length input. In other examples, head and/or tail static networks may be defined 1210 in order to handle padding at the layers of the source network. These two examples are represented by the branching decision point 1206 at which it is determined whether the source network introduces internal padding between the layers of the source network. Approaches have been described with reference to Figure 3 such that a centre network is defined for repetition over a sequence of fixed length inputs, with a head network being defined for operation on the first fixed length input of the sequence and/or a tail network being defined for operation on the last fixed length input of the sequence.

Steps 1204 to 1208/1210 establish the overlap and padding characteristics for a static network arranged to operate on a fixed size input. At 1212 the source network which is for operation on a dynamic length input may then be transformed, using the established overlap and padding characteristics, into a static network adapted to operate on a fixed length input. In this manner, a static network may be defined which performs equivalent operations to the source network but which is configured to operate on a fixed length input. Further steps may then be necessary to ensure that the static network, when implemented in hardware as a sequence of instances of the static network, is equivalent to the source network.

Typically the transformation steps 1204 to 1212 may at least partly be performed together since determining a static network adapted to operate on a fixed length input would generally require the size of the inputs to each layer to be determined such that the dimensions of the tensors on which each layer of the network operates can be fixed. In some examples, one or more template static networks could be defined prior to establishing the overlap and padding characteristics of the networks, with the template static networks then being modified to satisfy the overlap and padding characteristics so as to provide static networks for implementation in hardware.

Instances of the static network(s) so derived may be implemented in hardware 1214 (e.g. by control logic 418 at accelerator 402) for operation on the overlapping inputs of the fixed length. At run time, a dynamic input is split 1216 into a plurality of the overlapping fixed length inputs - this could be performed by the control logic, e.g. by passing to the instances of the static network(s) implemented at neural engines 406 suitable references to parts of the dynamic input held in memory (e.g. at memory 410 or on-chip memory 412). By operating 1218 the static network instances on the fixed length inputs and combining 1220 the outputs from those static network instances, an output may be formed which is equivalent to operating the source network on the dynamic input.

Tiling

Approaches have been described to divide a neural network operating on a dynamic input tensor into a set of overlapping static networks operating on fixed size portions of the input. This has the advantage that long input sequences can be processed by repeating the static networks (the centre network) an arbitrary number of times. Furthermore, it makes 'streamed' processing of dynamic inputs of indeterminate length practical in hardware because it is only necessary to buffer sufficient data (including any overlaps) to execute the next fixed size portion. The fixed size portions into which a dynamic input tensor is split may be referred to as tiles.

However, the approaches thus far described have the disadvantage that data in overlaps 328 of intermediate tensors are calculated multiple times, since there is no provision for sharing of overlapping regions between tensors (e.g. between 314 and 330). This can become problematic in deep networks, particularly those with operations with stride greater than one, since the required overlaps 322 on the input can become large. In extreme cases, the overlaps 322 may become larger than the input portions of size S. The tiling algorithm now described is one method of addressing this problem. It reuses internal overlaps from previous static network instances, rather than propagating them to the input tensor, thus solving the problem of unbounded growth of overlaps.

A tiling algorithm will now be described by way of example for identifying, during transformation of the source network in accordance with the principles set out herein, which part of each tensor of a static network is required for the operations of the subsequent instance of the neural network. When instances of the static network are executed at the NNA, that part of each tensor may be held in memory for use by the subsequent instance of the neural network operating on the next fixed size portion of the input data. Furthermore, by providing separate head and tail networks, the padding at each layer of the network can be independently and correctly handled.

In the present example, static head, centre and tail networks may be defined in accordance with the principles described above to operate on head, centre and tail input portions of fixed size. This enables left and right padding to be handled at the layers of the network. The head, centre and tail input portions may differ in size.

We consider two types of operations: elementwise and windowed operations. A windowed operation is one for which there is a spatial correspondence between data in its input and output tensors, and each datum in the output tensor is a function of data from a contiguous region (i.e. a window) of the corresponding part of the input tensor. Examples of windowed operations include convolutions and pooling operations. Windowed operations have the following fixed attributes. The dimensionality of these attributes matches the number of varying dimensions. In the one-dimensional case of the present example, all are scalar values.

- Kernel size (or window size): the size of the window required to generate a datum in the next tensor.

- Stride: the number of samples by which the kernel is shifted between applications.

- Left padding: the amount by which the input tensor is padded on left hand side in the variable dimension.

- Right padding: the amount by which the input tensor is padded on right hand side in the variable dimension.

In some windowed operations, a dilation parameter is also defined which would increase the effective kernel size. It will be apparent that the approaches described herein may be extended to networks which include dilation. Note that kernel sizes of 1 do not incur overlaps in the methods described herein.

Elementwise operations are per-element operations on tensors, e.g. unary elementwise operations such as activation functions and binary elementwise operations such as addition, subtraction, and multiplication. Since every output depends only on the same location in the input, elementwise operations have no spatial extent and effect no change on the shape of the tensor. This means that they do not need to be considered in the tiling algorithm and we can consider windowed operations only.

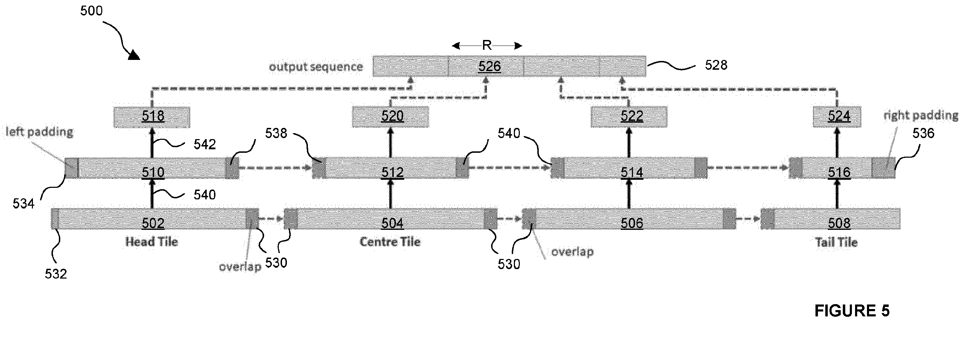

Figure 5 shows an exemplary set of static network instances 500 operating on a dynamic input which has been divided into data portions of fixed size: a head tile 502, two centre tiles 504 and 506, and a tail tile 508. The set of static network instances 500 may be derived from a dynamic subgraph in the manner described above, the dynamic subgraph representing all or part of a dynamic neural network and having dynamic inputs and outputs. A dynamic subgraph receives a dynamic input having at least one variable dimension. In some examples, a dynamic subgraph provides a dynamic output having at least one variable dimension (e.g. the dynamic subgraph does not include a reduction layer).

In Figure 5, unlike in Figure 2, arrows represent operations and blocks represent tensors. The static networks comprise two layers each performing a windowed operation: a first windowed operation 540, and a second windowed operation 542. The neural network represented by the set of static network instances in this example includes left and right padding: left padding 532 to its first layer and left padding 534 to its second layer; and right padding 536 to its second layer. Some operations and networks may not require any padding.

In most deep learning frameworks, the padding is treated as an attribute of the windowed operation itself (i.e. it is applied in the windowed operation). However, for clarity of explanation and in keeping with the convention followed in this description, the padding is applied to the input tensors themselves and the windowed operation operating on each input tensor is treated as if it had no padding. In some implementations, the left and right padding may alternatively be considered attributes of the following windowed operation.

Each portion 526 of the network output 528 has a fixed size R. In some implementations, the output portion generated by the tail and/or head networks may be of a different size. If the head network is to produce an output of the fixed size R, it typically requires a larger input than the centre tile to produce its output portion since it has no overlap with a preceding part of the dynamic input sequence, although in some cases left padding can reduce the actual size required.

Each of the input tiles can include an overlap 530: in the example of Figure 5, the input tiles include an overlap (where it exists) to their right and the left overlap (where it exists) is excluded. However, the right-hand overlap from one tile can be re-used for processing the next tile to the right (e.g. the right-hand overlap from the head tile 502 can be reused as a left-hand overlap for the first centre tile 504). This is illustrated in Figure 5 by the right-hand overlaps being drawn with a solid border, each with a dashed arrow leading to where the overlap may be reused as a left-hand overlap (also indicated with a dashed border). As such, in this example the overlap is present on the right side of the centre tiles, and of the head tile, and there is no overlap included in the tail tile. However, it is possible that the overlaps may be allocated to the input tiles in the other direction - that is, the input tiles could include an overlap (where it exists) to their left and the right overlap (where it exists) could be excluded. In that scenario, the tail tile would include an overlap and it would be the head tile that does not include any overlap. Attaching an overlap to an input tensor may for example be performed as a simple concatenation, or by splitting the input into overlapping portions in the control logic 418 prior to passing into the corresponding static network instances.

Exemplary algorithms for generating the sizes of the head, centre and tail tiles will now be presented. In the absence of padding and for a stride of 1, the number of input samples $x$ required to generate y output samples for a windowed operation (i.e. a single layer) with kernel size $k$ *is* given by:

$$x = y + (k - 1)$$

Extending this to operations with strides $t \geq 1$, the number of input samples $x$ required to generate $y$ output samples for a windowed operation with kernel size $k$ *is* given by:

$$x = ty + (k - t)$$

And the overlap $Q$ between two input tiles is given by:

$$Q = k - t$$

Leaving aside padding for the moment, the size of a head tile $H$ (including its overlap, if present) which is required to generate an output of length $R$ from a single windowed operation with kernel size $k$ and stride $t$ is therefore:

$$H = tR + (k - t)$$

Where the network comprises a dynamic subgraph having multiple layers, the size of the head input tile to each layer of the subgraph can be defined recursively, working from the size of the output $R = H_n$ of the last dynamic layer (closest to the subgraph output and providing a dynamic output of variable size) back to the input of the first layer (closest to the subgraph input):

$$H_{n-1} = t_n H_n + (k_n - t_n)$$

Introducing left padding p increases the effective input size to the head network. To keep the number of outputs the same, we therefore need to subtract the padding from the number of samples that we input to the layer:

$$x = ty + (k - t - p)$$

Including this in the formula for calculating the input size of the head tile to a given layer, including its overlap (if present) is:

$$H_{n-1} = t_n H_n + (k_n - t_n - p_n)$$

The size of the input head tile $H_0$ including its overlap (if present) may therefore be recursively established by operating the above equation on each windowed layer of a dynamic subgraph of the neural network, starting at the dynamic output of the last windowed layer (the windowed layer closest to the network output) and working down the layers (i.e. getting closer to the dynamic network input) until reaching $H_0$. The dynamic subgraph may be all or part of the dynamic network which is for operation on a dynamic input tensor. Note that in some implementations, the head network may be configured to produce an output of length different to $R$ in which case the constant $R$ in the equations above is replaced with the length $R_H$ of the output of the head network. Provided the length $R_H$ is fixed, the approach of representing a network having a dynamic input as a set of static networks operating on fixed length portions is maintained.

Since the padding of the neural network represented by the set of static networks is handled at the head and tail networks, we do not have to consider padding for the centre networks. In addition, the size of the overlap received from the previous tile matches the size of the overlap calculated for passing to the next tile, so this also does not appear in the equation. The recursive formula for calculating the input size for the centre tile including its overlap (be that a right-hand or left-had overlap, depending on the scenario) is therefore simply:

$$C_{n-1} = t_n C_n$$

And the size of the input centre tile $C_0$ including its overlap is therefore found by recursively operating the above equation down the windowed layers of the dynamic subgraph (i.e. from the windowed layer closest to the output down to the windowed layer closest to the input), which in closed form is simply:

$$C_0 = R \prod_n t_n$$

Suppose that the total length of the dynamic input to the neural network represented by the set of static networks is of length $L$. The number of iterations $a$ of the centre tile required to cover the input sequence is:

$$a = \left\lceil \frac{L - H_0 - A}{C_0} \right\rceil$$

The size of the input to the tail tile must be sufficiently large to calculate at least 1 output. For this reason, a limit may be imposed that the input tail tile must comprise at least $A$ inputs, where $A = \Pi_n t_n$ is the product of the strides of all of the windowed layers of the dynamic subgraph. i.e. $T_0 \geq A$. This is accounted for in the above equation for $a$.

The length of the input tail tile $T_0$ including its overlap (if present) is then given by subtracting from the total length of a dynamic input the length of the head tile and the total length of the $a$ iterations of the centre tile:

$$T_0 = L - H_0 - aC_0$$

Note that, by this definition, the tail tile size is a function of the length $L$ of the dynamic input. On the face of it, this suggests that the tail tile size is not necessarily known during network transformation 416. However, an expected or exemplary dynamic input length $L$ may be used in order to calculate a suitable tail tile size a design time. In some examples, multiple tail networks may be defined, each for operation on a different size tail tile so as to enable a range of lengths of dynamic input to be accommodated. Approaches are also described herein for padding a dynamic input portion so as to achieve the required size for a given tail tile which enables a given tail network to operate on a range of sizes of dynamic input portion.

In the above approach for calculating the size of the input tail tile, any right padding is simply added to the right-hand side of the input tail tensor. It will be appreciated that a tighter minimum size of the input tail tile may be calculated by taking into account the right padding of the input to the neural network.

For short input sequences, no centre tiles may be necessary in order to process the input. In order to correctly handle left and right padding of a network, generally a dynamic subgraph must at a minimum be represented as a static head network and a static tail network. This means that the minimum sequence length which can be operated on by a set of neural networks configured as described herein with tile sizes calculated according to the above exemplary equations is $H_0 + A$.

In some cases, explicit overlaps are not present at the input to the first layer, e.g. the overlap may be handled by splitting the input into overlapping portions (e.g. by the control logic 418) prior to passing into the corresponding static network instances. In such examples, there is no need to hold over the overlapping portion of the input tensor (i.e. the input to the first layer of the network instances) during operation of the network instances because the dynamic input may instead be split into overlapping portions that include the tile and its overlap - for example, in Figure 5 the data portion provided as input to the centre network 504 may include the centre tile 324, and its right-hand overlap 530. In this manner the overlaps on the input tensor may be implicitly provided to the network instances. The head and centre tile sizes for an input to a first layer without explicit overlaps simply requires the addition of the overlap size $k_0 - t_0$ to the

head and centre tile sizes given above, where $k_0$ is the kernel size of the input layer and $t_0$ is the stride of the input layer.

The effect of dilation $d$ in a network effectively increases the kernel size from $k$ to $k'$, where:

$$k' = d(k - 1) + 1$$

The effect of dilation on the size of the input tiles may therefore be calculated by replacing k with $k'$ in the above equations.

The fixed size tiles are derived from the dynamic input of length $L$ which can vary in size at run time. The static centre networks are adapted to generate fixed length outputs of length R. The static head network is adapted to generate a fixed length output of length $R_H$ which may be equal to $R$. In order to enable the set of static networks 500 to handle variable input sequence lengths, multiple versions of the tail network may be defined, each adapted to operate on a different fixed length input. The number of tail networks which need to be defined can be reduced by selecting a small size R for the output of the centre networks. In some implementations, additionally or alternatively, multiple versions of the centre and/or head network may be provided, each version being adapted to operate on a different fixed length input.

Each time a static network of the set is implemented for processing at hardware, there is an associated overhead in memory accesses and configuring the hardware to operate the network. It can be advantageous to provide multiple versions of the centre network so as to reduce the number of times a static network needs to be implemented in hardware. For example, multiple versions of the centre network may be defined, each version having a power-of-two output or input sequence length (recall the length of the output is a function of the length of the input). An arbitrary input/output sequence length could be represented by a combination of such fixed centre network versions.

For instance, consider an output length of 51 not including the outputs of the head and tail networks: in binary 51 is represented as 110011, meaning that networks of output length 32, 16, 2 and 1 may be used to achieve the correct output length whilst minimising the number of static networks which must be implemented. Thus, in operation when the size of the dynamic input is known, one or more different sizes of centre network may be selected from a predefined set of centre networks for implementation so as to collectively provide the required input size (i.e. the input length of the dynamic input which is to be operated on by the centre networks, not including the inputs to the head and tail networks) whilst minimising the number of centre network instances which must be implemented.

The tiling approach described herein enables the input tensors to each layer of the network to be managed efficiently, avoiding repeating calculations between instances of the static network. This is because the tiling approach enables appropriate configuration at hardware for implementing the static neural networks so that data at any layer of the network can be held in memory for use by a subsequent instance of the static network. This is possible because the padding and overlap can be determined and accounted for during network transformation.

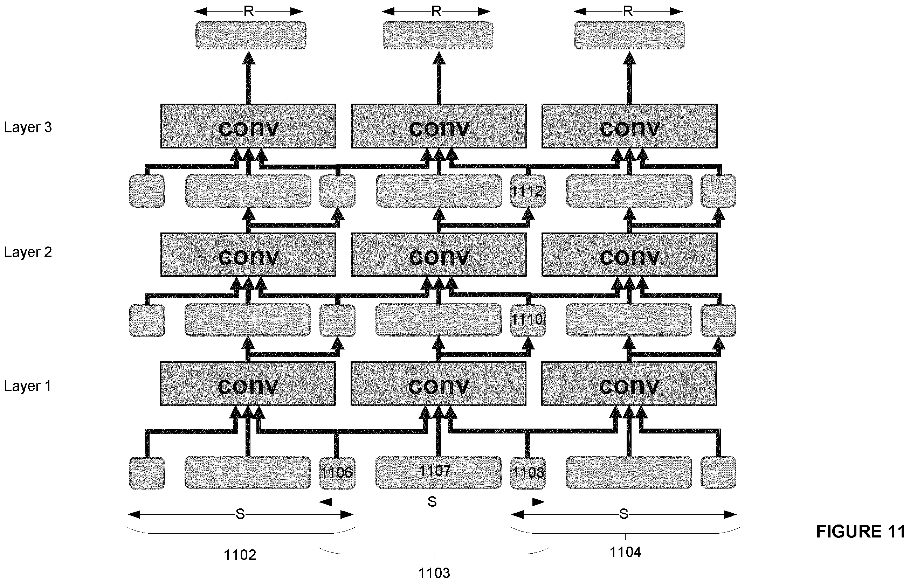

Figure 11 shows a sequence of three instances of a static centre network 1102, 1103 and 1104. Each instance of the centre network comprises three convolution layers which operate on an input portion of length S and generate an output of length R. In the figure, the input portion to each layer of the network is shown with its overlaps split out so as to illustrate the sharing of the overlapping parts of each data portion. For example, the input portion to instance 1103 of the static centre network comprises a left overlap 1106 which is also the right overlap of network instance 1102, a centre part 1107 which is unique to instance 1103, and a right overlap 1108 which is also the left overlap of network instance 1104.

The first layer of instance 1103 operates on an input portion 1107 and its overlaps 1106 and 1108 so as to generate an output which is the input to the next layer of the network instance. The input portion 1107 and its overlaps 1106 collectively represent a centre tile. As illustrated by the arrows in Figure 11, the right overlap 1110 of the output from the first layer is held over (e.g. in a memory) for use as the left overlap of the input to the second layer of network instance 1104. Similarly, the right overlap 1112 of the output from the second layer is held over (e.g. in a memory) for use as the left overlap of the input to the third layer of network instance 1104. As described, the size of the overlaps at each layer are appropriate to that layer of the network.

The tiling algorithm has been described with respect to a single dynamic dimension, e.g. width, height or depth. The algorithm can be straightforwardly extended to a greater number of dynamic dimensions - i.e. to input sequences which are variable in size in more than one dimension. In higher dimensions, the equations above can be extended to vector quantities expressing the parameters of the network over its multiple variable dimensions. It is however necessary to define more tile types in higher dimensions, because the notion of a head, centre or tail tile exists for each dimension, giving a total of $3^D$ tile types where D is the number of dimensions.

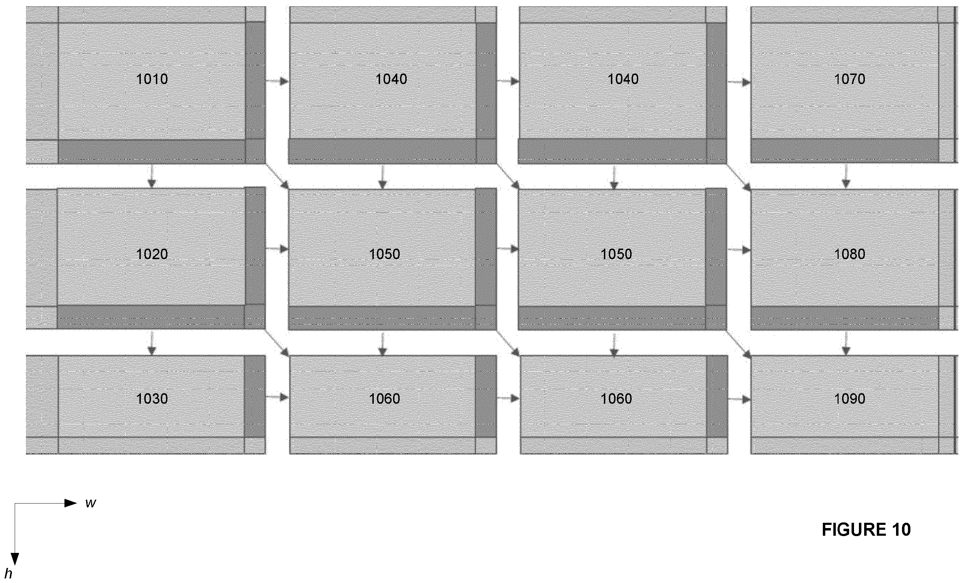

Figure 10 gives a high-level example of dividing a dynamic input tensor having two variable dimensions (height and width) so as to create $3^2 = 9$ types of tile labelled 1010 to 1090 in the figure: every combination of head, centre and tail tile in the height dimension with the head, centre and tail tiles in the width dimension. In the figure: tile type 1010 represents a head tile in both the height and width dimensions; tile type 1020 represents a head tile in the width dimension and a centre tile in the height dimension; tile type 1030 represents a head tile in the width dimension and a tail tile in the height dimension; tile type 1040 represents a centre tile in the width dimension and a head tile in the height dimension;

tile type 1050 represents a centre tile in both the width and height dimensions; tile type 1060 represent a centre tile in the width dimension and a tail tile in the height dimension; tile type 1070 represents a tail tile in the width dimension and a head tile in the height dimension; tile type 1080 represents a tail tile in the width dimension and a centre tile in the height dimension; and tile type 1090 represents a tail tile in both the width and height dimensions.

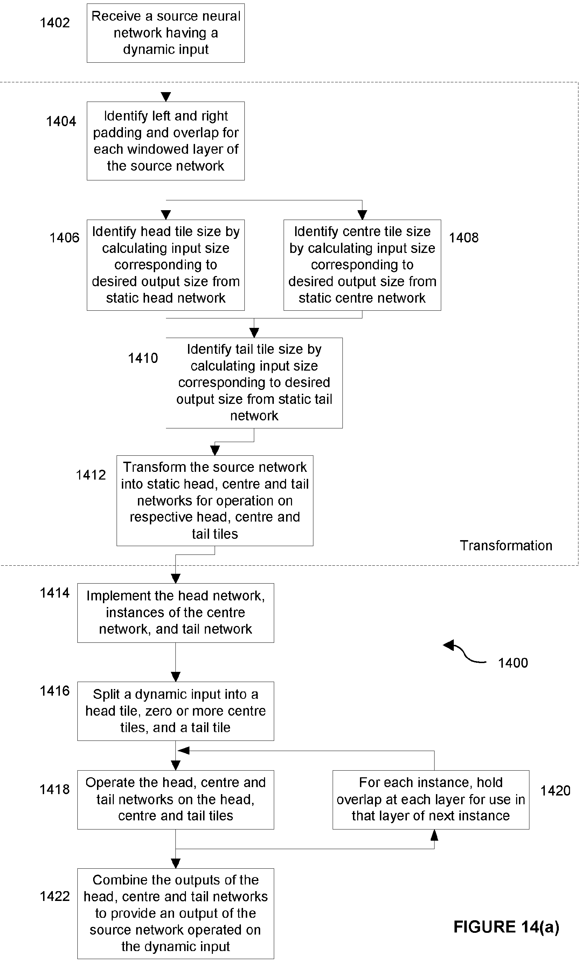

Figure 14(a) is a flowchart 1400 illustrating an exemplary tiling approach to implementing a dynamic network in hardware. A received source network 1402 is transformed at steps 1404-1412 into head, centre and tail networks for operation on respective tiles in the manner described. It will be appreciated that Figure 14(a) illustrates one approach to performing tiling and other approaches to forming head, centre and tail networks are possible in accordance with the principles described herein. For clarity, in this example it is assumed that the source neural network in its entirety represents a dynamic network for operation on a dynamic input and arranged to provide a dynamic output, but the same principles could be applied, for example, to a dynamic subgraph representing all or part of a source neural network. For example, a dynamic subgraph of a source network may output to a static subgraph in a source network in the manner described the section "Splitting static and dynamic graphs" below).

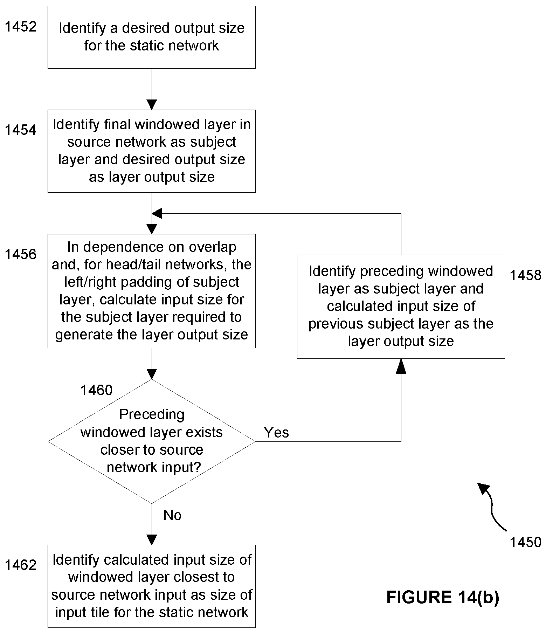

As has been described, layers of a network may include windowed operations. At 1404, the overlap and left and right padding of each windowed layer of the network are identified from the attributes of the source network. For a given desired output size, the size of the input tile to each of the static head, centre and tail networks may be calculated. In some examples and as shown in Figure 14(b), the size of the head and centre tiles may be calculated first (1406 and 1408), followed by the size of the tail tile (1410) which may be determined from the size of the head and centre networks in the manner described above. In other examples, the calculation of the size of the tail tile (1410) may be performed independently of the calculations of the size of the head and centre tiles (1406 and 1408) and so could be performed concurrently with calculation 1410. For example, the size of the tail tile may be selected from a set of predefined sizes.

An exemplary approach to performing the calculations 1406-1410 to identify the sizes of the head, centre and tail tiles is shown in the flowchart 1450 of Figure 14(b). The same approach may be used to calculate a size for each of the head, centre and tail tiles and hence enable the respective stats head, centre and tail networks to be defined at 1412 of Figure 14(a). At 1452 of Figure 14(b), a desired output size is identified for the static head, centre or tail network. The desired output size may be identified in any suitable manner. For example, the desired output size may be selected in dependence on the characteristics of the hardware on which the neural network is to be implemented (e.g. of a size which is has performance or memory resource benefits), and/or the output size may be selected in dependence on the application for which the output of the neural network is intended, and/or the output size may be selected with regard to the expected range of lengths of the dynamic input.

The calculation of the input tile size for the static head/centre/tail network which is to be defined starts 1454 at the final windowed layer of the source network. The input size for the final windowed layer which is required to generate the desired output size is calculated 1456 in dependence on the overlap and (in respect of a head or tail tile) the padding properties of the final windowed layer identified at 1404. The calculation of the input size to a layer for a given output size from the layer may be performed in the manner described above. If a preceding windowed layer exists in the source network 1460 then the input size to that preceding layer is similarly calculated at 1456 using the input size calculated for the final layer as the output size of that preceding layer 1458. The calculations 1456 are repeated until the input size for all of the windowed layers of the network has been determined and the input size for the first windowed layer closest to the network input has been identified 1462. The input size for the first windowed layer is the size of the head, centre, or tail tile, as appropriate.

In order to identify the size of the head tile for the static head network, the steps 1452-1462 are performed with the calculation step 1456 being performed in dependence on the overlap and the left padding identified for each layer of the source network. In order to identify the size of the centre tile for the static centre network, the steps 1452-1462 are performed with the calculation step 1456 being performed in dependence on the overlap identified for each layer of the source network. In order to identify the size of the tail tile for the static tail network, the steps 1452-1462 are performed with the calculation step 1456 being performed in dependence on the overlap and the right padding identified for each layer of the source network.

Using the size of the head/centre/tail tiles identified at 1406/1408/1410, the source network is transformed 1412 (e.g. at transformation unit 416) into a head/centre/tail network for operation on respective head/centre/tail tiles. As has been described, the operations at the layers of the centre, head and tail networks are equivalent to those of the source network, but the centre/head/tail network are adapted for operation on their respective fixed size tiles. Since the input tensor is split into the head and/or centre and/or tail tiles, the sequence of overlapping tiles collectively represent the input tensor.

The head, centre and tail networks may then be implemented 1414 in hardware for operation on runtime on a dynamic input split into head, centre and tail tiles in the manner described herein. Being static networks for operation on a fixed length input, the centre, head and tail networks are suitable for implementation in hardware - e.g. by control logic 418 at accelerator 402. A dynamic input on which the network is to operate is split 1416 into a head tile (the first portion of the input), zero or more centre tiles, and a tail tile (the last portion of the input) in accordance with the principles described above. The number of centre tiles depends on the length of the dynamic input. A respective head, centre and tail network is arranged to operate on each of the head, centre and tail tiles. Thus, there may be multiple instances of the centre network, each instance being arranged to operate on a different centre tile of the sequence of tiles into which the dynamic input is split.

The head, centre and tail networks may be operated 1418 on their respective tiles so as to effectively perform the source network on the dynamic input. The implementation of the static networks is configured such that the overlap at each layer of the network (e.g. as identified at step 1404) is held over 1420 for use in the corresponding layer by the next instance. This is described above with reference to Figure 11 and improves the efficiency of the implementation by avoiding the need to repeat calculations in respect of the overlap regions of the input data.

By combining 1422 the outputs of the head, centre and tail networks, an output equivalent to the output of the source network operated on the dynamic input can be provided.

Splitting static and dynamic graphs

Neural networks for implementation in hardware may include a reduction layer which operates on the variable dimension of a dynamic input to that layer. Reduction operations convert to a fixed size the dimensions over which it operates - in other words, the input to a reduction layer may be dynamic in size over a given dimension but operating the reduction operation over that variable dimension results in an output from the reduction layer which is fixed in size in that dimension. The fixed size of the dimension in the output may be a single unit (i.e. size 1). Examples of reduction operations include sum reduction and max reduction operations. Reduction operations are common examples of operations that always yield a static output over the dimension(s) to which they are applied, but it will be appreciated that the principles described may equally be applied to other operations that yield a static output from a dynamic input.

An example including a reduction operation is shown in Figure 6, which illustrates a simple network 600 operating on a dynamic input 608. A set of three convolution operations 602 operate on the dynamic input 608 and, as has been discussed, the output of these windowed operations will itself be dynamic over the variable dimensions. A max reduction operation 604 operates on the output of the convolution operations over the variable dimensions. The output of the max reduction operation is therefore a fixed size output 610. Two fully connected layers 606 are shown operating on the output from the max reduction operation. Since the input to these layers is fixed in size, so is the final output 614 from these layers.

Those layers which operate on fixed size inputs and generate fixed size outputs (e.g. fully connected layers 606) may be termed a static subgraph 606 of the network, and those layers which operate on variable size inputs (e.g. convolution layers 602 and max reduction layer 604) may be termed a dynamic subgraph 612 of the network. If present in the network, a dynamic subgraph may include a reduction layer.

In some networks, a static subgraph may precede a dynamic subgraph. For example, auto-recursive decoders receive a fixed size input and generate additional outputs in respect of timesteps which are unknown at design time - thus the output of an auto-recursive decoder may be dynamic in size whilst its input is fixed in size. For instance, a transformer decoder is an example of an auto-recursive decoder and so can be considered to be a dynamic graph which may be preceded by a static graph adapted to operate on a fixed size input.

Approaches have been described to implement dynamic networks in hardware which is adapted to perform static neural networks. It is advantageous when implementing dynamic networks in hardware - whether in accordance with the principles set out herein or otherwise - to split neural networks which include dynamic and static subgraphs into those dynamic and static subgraphs. Such dynamic neural networks are split at the reduction operation such that the static subgraph may be implemented in hardware as a conventional static neural network, and the dynamic subgraph may be implemented in hardware in accordance with the principles set out herein (or any other approach for implementing dynamic networks in hardware). The dynamic and static subgraphs into which the dynamic neural network is split collectively represent the dynamic neural network.

An example of an implementation of a neural network which is split into dynamic and static subgraphs has been shown in Figure 1(b). A neural network for implementation in hardware is split into a dynamic subgraph 112, and a static subgraph 107. In accordance with the principles described herein, the dynamic subgraph is implemented as a set of static network instances, each static network instance being arranged to operate on a fixed size portion of a dynamic input 101. The static subgraph 107 is implemented in a conventional manner.

Note that neural networks may have a more complex architecture than shown in Figures 1 and 6 and could include, for example, branches, merges, concatenations, and other operations with multiple inputs and/or outputs. Multiple static and dynamic subgraphs may be identified according to the principles described herein, with one or more of the dynamic subgraphs being implemented in hardware according to any of the approaches described herein and one or more of the static subgraphs being implemented in hardware according to any suitable approach. Note that not all outputs from a neural network implemented according to the principles described herein need be a fixed size output: one or more of the outputs may be a dynamic output which is variable in size.

Figure 7 illustrates network 600 shown in Figure 6 split into dynamic 612 and static 606 subgraphs, with the dynamic subgraph 612 being implemented as a set of static network instances, each instance 702 operating on a fixed size input portion 701a-701c in a manner described herein. Multiple instances of the static network 702 are provided to collectively perform the operations of the dynamic subgraph 612 on the whole dynamic input sequence 608. Each subgraph instance includes a max reduction operation 703 adapted to operate on the fixed size output from the convolution layers of the subgraph. The static subgraph 606 may be unmodified and implemented as a single instance of that static network.

In Figure 7, a dynamic elementwise maximum layer 704 is provided which is configured to combine the output from each of the static network instances 702 so as to provide a fixed length input of the appropriate length to the fully connected layers of the static subgraph 606. The dynamic elementwise layer may be implemented in any suitable manner. For example, control logic 418 may be configured to combine the outputs of the subgraph instances it has caused to be implemented at the neural engines 406, with the result of that combination being provided to a static subgraph 606 implemented at one or more of the neural engines 406. In general, the dynamic elementwise maximum layer may be embodied in any combination of software (e.g. a driver running a general purpose processor), firmware (e.g. firmware of the neural network accelerator 402), or hardware (e.g. a dedicated processor at or accessible to the NNA 402). Note that a dynamic elementwise operation is equivalent to a concatenation followed by a dynamic maximum reduction. This dynamic concatenation/reduction may be relatively small and cheap to implement in software or firmware, for example operating over only as many input elements as there are network instances 702.

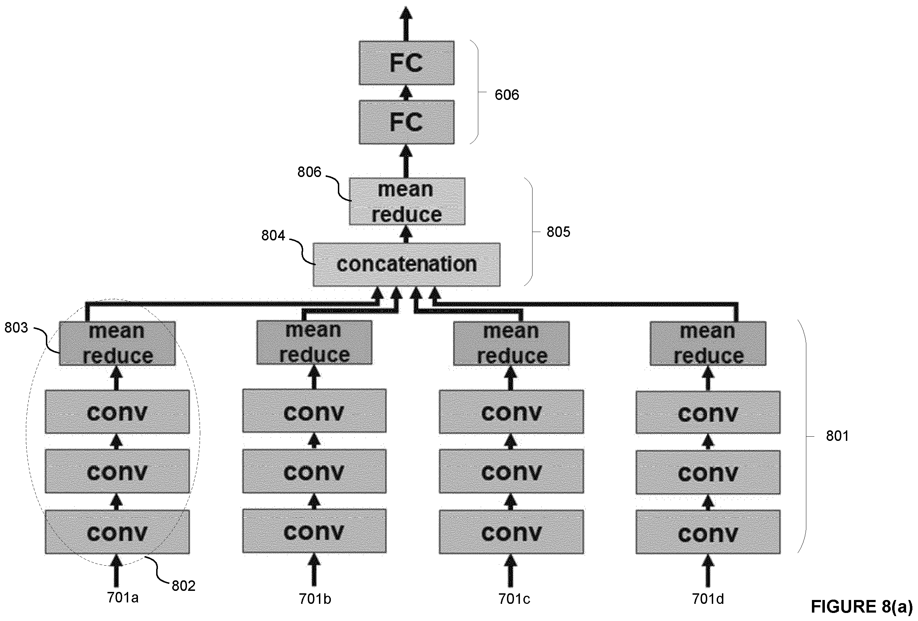

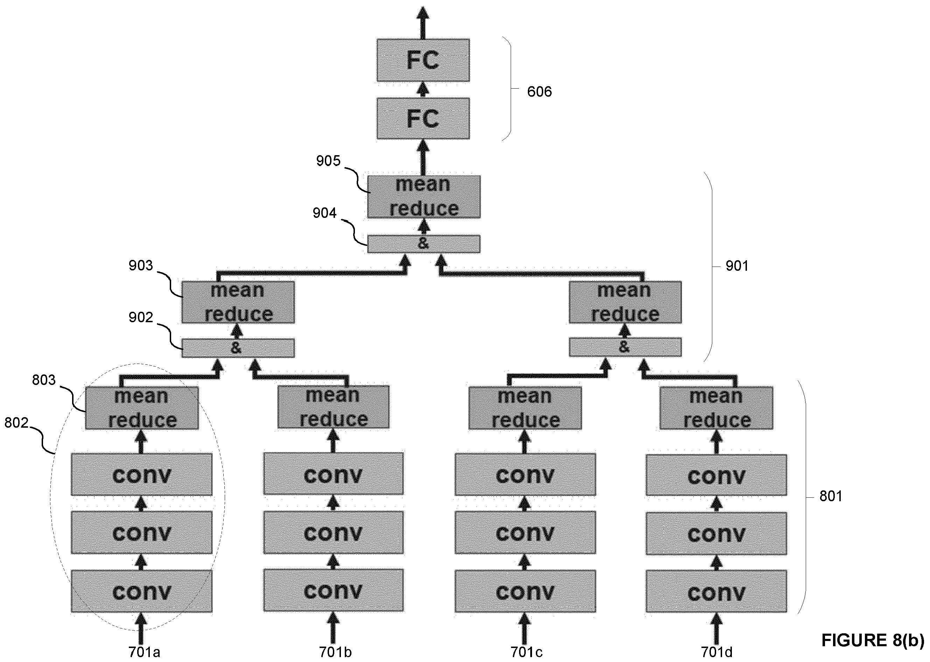

The combination of outputs from the instances of the static network may be performed by the control logic 418 at the NNA 402. Figure 8 shows an exemplary combination of outputs from instances of a static network. In Figure 8(a), the source neural network which is to be implemented in hardware is the same network as shown in Figure 6, but with the max reduce layer 604 replaced with a mean reduce layer 803. The dynamic subgraph 801 of the network is represented as a set of instances 802 of a static network- four instances are shown in the figure but in general there may be any number, as appropriate to the size of the input portion 701 to each instance and the total size of the dynamic input. As has been described, the static network 606 is unchanged and executed as a single instance.

In order to combine the outputs from the instances 802 of the static network, one or more suitable operations 805 are introduced into the network between the instances of the static network and the static subgraph 606. In the example shown in Figure 8(a), a dynamic sized concatenation layer 804 is provided to combine the outputs from the instances of the static network, and a further dynamic sized mean reduce layer 806 is provided to reduce the size of the concatenated outputs to the input size expected by the static subgraph 606. The network illustrated in Figure 8(a) which includes dynamic sized layers 805 for combining the outputs from the static network becomes implementable in hardware when the combination operations are transformed into static operations (e.g. 901) in the manner described below with respect to Figure 8(b).

Typically, a range of different operations could be used to combine the outputs from the instances of the static networks. For example, as an alternative to the dynamic concatenation and mean reduce operations in Figure 8(a) that is static and therefore implementable in hardware (e.g. at the neural engines 406 of NNA 402), a sum reduce operation may be performed followed by an element-wise sum operation which is used to form a running summation from the sequence of instances of the static network, the output of the final instance of the element-wise maximum being divided by the number of elements and then provided to the fully connected layers of the static subgraph. In other examples, an element-wise mean reduction tree may be used to combine the outputs from the static network instances into a single fixed size input to the static subgraph.

Figure 8(b) shows a further hardware-implementable example of using a reduction tree 901 to combine the outputs from the instances of the static network 802. In this example, the outputs from each pair (in general, any number) of static networks are concatenated 902 and then a fixed-size mean reduction 903 is applied to reduce the size of the concatenated tensor to an intermediate size expected by a concatenation operation 904 of the next level of the reduction tree. A mean reduction 905 is performed to reduce the size of the concatenated tensor to the size expected by the static subgraph 606. In some examples, each of the pairs of concatenation and mean reduction operations (e.g. concatenation 902 followed by mean reduction 903) may equivalently be replaced by elementwise mean operations, which for input tensors $A$ and $B$ outputs the average, i.e. $(A + B)/2$. The size of the reduction tree will depend on the length of the dynamic sequence being processed.

The selection of the operations used to combine the outputs of the instances of the static network may be performed, for example, so as to optimise the performance of the neural network implementation in hardware. Note that implementing a neural network in hardware according to the approaches described with respect to Figures 7, 8(a) and 8(b) will result in a functionally equivalent neural network which generates the same output for a given input.

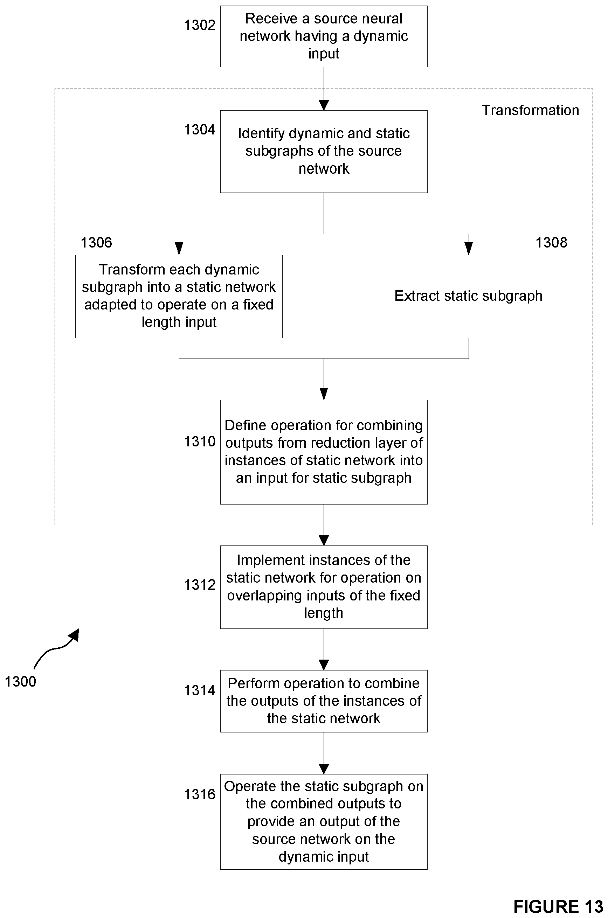

Figure 13 is a flowchart 1300 illustrating the above described approach of splitting a network into dynamic and static subgraphs. At 1302 a source neural network is received in which dynamic and static subgraphs are identified 1304 (e.g. at transformation unit 416). The dynamic subgraph may be handled in the manner described above and accordance with the principles described herein (e.g. see Figure 12) so as to transform 1306 the dynamic subgraph into one or more static networks adapted to operate on a fixed length input. The static network(s) include a reduction layer. The static subgraph is extracted 1308 from the source neural network - generally without modification - for operation on a static input.

At 1310 a suitable operation is defined for combining the outputs from the reduction layer of instances of the static network(s) so as to provide an input for the static subgraph. Examples of suitable combination operations are described above. In some examples the static subgraph may be modified so as to adjust the input size on which it operates - e.g. in order to match the size of the output from the combination operation.

At 1312 the instances of the static network(s) may be implemented in hardware for operation on a sequence of fixed length inputs - e.g. by control logic 416 at accelerator 402. The combination operation is performed 1314 at the hardware in order to combine the outputs from the instances of the static network. By operating 1316 the static subgraph on the output of the combination operation, an output for the network may be formed which is equivalent to operating the source network on the dynamic input.

Masking

The tiling approach as described above typically requires multiple tail and/or head networks to be defined in order to accommodate any length of dynamic input. Considering a single dynamic dimension, dynamic inputs which differ in length by a multiple of the fixed centre input portion size S (which the repeating instances of centre network are adapted to receive) can be accommodated by simply varying the number of instances of the centre network implemented in hardware. In order to accommodate dynamic inputs which differ in length by less than the fixed centre input portion size S, it is necessary to implement the network in hardware with different mappings of tail and/or head networks which are adapted to operate on fixed size inputs having a length appropriate to the length of the dynamic input to be processed.

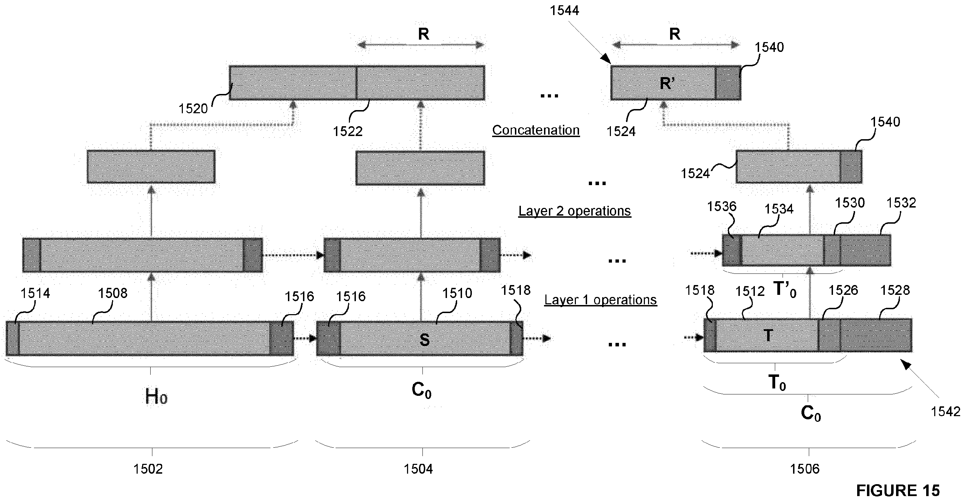

An approach will now be described with reference to Figure 15 which enables a single static tail and/or head network to be defined which can receive a variable length portion of a dynamic input. This allows almost any length of dynamic input to be handled by single mappings of static head, centre and tail networks (with some constraints on the minimum size of the dynamic input). In general the approach may be applied to any static network, including a centre network.

Figure 15 illustrates an example of a static tail network 1506 which is adapted to receive an input having a total fixed length Co 1542 which is equal in size to the centre tile input Co (including its overlaps) to each centre network 1504. In general, the tail network may be adapted to receive an input of any fixed length (subject to overlap and padding constraints), which may be different to the total input length which the centre network is adapted to receive. Arranging that the size of the input to the tail network is the same as the input to the centre network has the advantage that a centre network mapping established on transforming a source network (e.g. at transformation unit 416) may be used as the basis for the tail network.

The head network 1502, centre network 1504 and tail network 1506 are static networks derived from a source network which is for operation on a dynamic input. The dynamic input is split into fixed length head and centre tiles (with padding and overlaps as appropriate to the network) which are operated on by the head and centre networks. As has been described, the centre network is repeated a sufficient number to substantially consume the complete length of the dynamic input. Typically however, after a dynamic input has been split into a head tile and a plurality of centre tiles, a final portion of the dynamic input remains - the tail tile - having a length less than the length of the centre tile. Since the dynamic input is variable in size, the size of this tail tile will vary.

As defined, the head, centre and tail tiles include their respective overlaps with adjacent tiles and, as appropriate, any padding data. The input portions (e.g. 1508, 1510 and 1512) of the head, centre and tail tiles into which the dynamic input is split are therefore collectively equal in size to the dynamic input.

The head, centre and tail networks may be derived at transformation unit 416 from source network 413 in accordance with the principles described herein. The tile sizes for the head and centre networks, along with the size of any padding and overlaps, may be determined in any suitable manner. For example, the tiling approach described above may be used to determine the tile sizes for the head and centre networks.

Figure 15 illustrates an implementation of a source network as a head network 1502, instances of a centre network 1504, and a tail network 1506. The networks comprise two layers represented in the figure as arrows: layer 1 operations followed by layer 2 operations, with the fixed size output of the layer two operations being combined by a concatenation operation so as to generate the full dynamic output of the networks. The static head network 1502 receives a fixed size head input portion 1508 and padding 1514 and overlap 1516 as required by the layer 1 operations. The head network operates on its fixed length input $H_0$ so as to generate a fixed length output 1520. Each centre network 1504 receives a fixed size centre input portion 1510 and overlaps 1516 and 1518 as required by the layer 1 operations. The centre network operates on its fixed length input $C_0$ so as to generate a fixed length output 1522 of length R.

The tail network 1506 receives a fixed size input of total length $C_0$ comprising a final portion 1512 of the dynamic input, and padding 1526 and overlap 1518 as required by the layer 1 operations. In this example, the total size of the input to the tail network $C_0$ is the same as the total size of the input to the centre network Co. In some cases (and as shown in Figure 15), the size $T_0$ of the expected input to the tail network comprising the tail tile 1512, its overlap 1518 and its right padding 1526 (as appropriate to the layer 1 operations) will be smaller than the total size of the input to the centre network Co. In such cases, to ensure that the total size of the input to the tail network is the fixed size Co, mask data 1528 is appended such that the input to the tail network is of the fixed size Co. This enables different lengths of dynamic input (and so sizes of the tail tile 1512) to be accommodated by the static tail network.

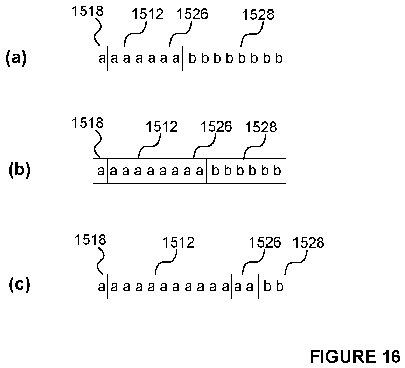

An approach is described below which enables a static tail network to operate on a variable size tail tile $T_0$ by padding out a tail input portion T with mask data so as to achieve a fixed size input $C_0$. The mask data for each size of tail tile represents an input mask. Figure 16 illustrates three different input masks (a) to (c), each of length Co for the tail network 1506 shown in Figure 15. In Figure 16 each input mask has 15 elements with each element representing a data value 'a' or a mask value 'b'. The length of the tail tile 1512 increases from input (a) through to input (c). In each of the input masks (a) to (c), each of the overlap 1518, tail tile 1512, and padding 1526 are represented by a data value 'a'; and the mask data 1528 is assigned a mask value 'b'. As can be seen from the figure, as the length of the tail tile increases, the number of data elements increases and the number of elements assigned a mask value decreases. Thus, each input mask represents an input having a different size tail tile, such that a set of input masks represents a corresponding set of sizes of tail tile.

In order to maximise the range of lengths of tail tiles which the tail network can process, it is advantageous for the set of input masks to range from an input mask having a tail tile which is a single element in size, up to an input mask having a tail input portion 1512 which is equal to:

$$C_0 - length\ of\ overlap\ 1518 - length\ of\ padding\ 1526 - 1$$

Generally it is advantageous if an input mask is provided representing every possible length of the tail input portion - for example, for every possible length of tail input portion within the above range.

When the tail tile (including its overlap and padding) fills the length of the fixed size input Co to the tail network then no mask values are included in the input to the tail network and the output of the tail network is simply the complete output from the final layer of the network in the typical manner.

Figure 15 illustrates the operation of the static tail network 1506 on a fixed size input $C_0$ comprising a tail input portion T 1512 and mask data 1528. It can be seen from the figure that each layer of the tail network generates an output which includes mask data of a respective size (e.g. mask data 1532 in the output of the first layer of the tail network). The mask elements output by each layer of the tail network are those elements which are generated as a consequence of (e.g. in dependence on and/or which receive a contribution from) the mask data 1528 (e.g. padding values) included in the input 1542 to the tail network. Thus, for a given size tail input portion T provided in the input to the tail network, the output of the final layer includes a corresponding size of mask data 1540. The output from the tail network may be represented by an output mask that identifies which elements of the output are mask values and which elements are data values. An output mask may therefore be defined for each of a set of input masks representing the possible sizes of tail tile which can be provided to the static tail network.

For a given size of input tail tile $T_0$, it may be determined which elements of the output from the first layer were generated in respect of that tail tile (i.e. not including mask values). This is generally straightforward since it will be known from the properties of the layer operations. For example, for a network layer performing a windowed operation, the size of the output given a particular size of tail tile will be determined by the kernel size, stride and padding characteristics of the operation. Thus, for a given size of tail tile $T_0$, the corresponding size of the output data (i.e. not including mask values) from the first layer in respect of that input data may be calculated. The size of the output data may be represented by an output mask of the first layer (or, equivalently, an input mask to the next layer). Once the size of the input data to the next layer is known, the size of the output data from that layer may in turn be calculated, and so on until the size of the output data from the final layer is identified (e.g. 1524 in Figure 15).

The size of the output data from each layer of the tail network may be represented by an output mask (or, equivalently, an input mask to the next layer). Such a mask may have any suitable form: for example, the mask may indicate which elements of the layer output are data values and which elements are mask values in the manner illustrated in Figure 16. The output mask of each layer of the network depends on the input mask to the tail network. Each of the set of possible input masks to the network therefore has a corresponding group of layer output masks - including the output mask of the final layer which represents which elements of the final output are data values and which are mask values.

For a given input mask to the tail network, the output mask of the final layer of the network identifying the data values in the final output can therefore be identified. This allows the useful output data values (i.e. not including mask values) in the final output of the tail network to be extracted that are generated in respect of the tail tile $T_0$ to the tail network. However, it is further necessary to ensure that the mask values used to pad the input to each layer of the network are appropriate to the operation(s) performed at the layer so as to ensure that the mask values do not contaminate the output generated in respect of the input data to the layer.

Looking at the first layer of the tail network shown in Figure 15, it is important that the mask values 1528 are selected appropriate to the nature of the operations performed at the first layer so that the mask values do not affect the output elements of the first layer $T_0'$ comprising 1536, 1534 and 1530. $T_0'$ represents the output data generated by performing the first layer operations on the tail tile $T_0$ comprising 1518, 1512 and 1526. For example, if the first layer is a softmax (which involves addition operations), the mask value is $-\infty$; if the first layer is a convolution (which involves multiplication operations), the mask value is 0. In general, appropriate data and mask values may be selected for a layer so as to ensure that, given the nature of the operation(s) of the layer, the mask values do not contaminate the output data of the layer which is generated in respect of the input data (i.e. not including the mask values input to the layer).

In order to appropriately set the mask values of the input to each layer of the tail network, a suitable elementwise operation may be performed using the input mask identified for that layer of the network (or, equivalently, the output mask of the preceding layer). For example, between layers of the network, a selected elementwise operation may be performed to combine the output of a layer with the corresponding output mask identified for the layer in order to appropriately set the mask values for the next layer. The input mask of a layer identifies which elements of the fixed size input represent mask values and which represent data values.

An elementwise operation is performed to prevent contamination of the layer output by the mask values of the input. This is achieved by selecting an elementwise operation which sets the mask values of the input to the next layer to values which, given the operation(s) performed by the next layer, will not contribute to (e.g. will not corrupt) the output data values calculated in respect of the input data values (i.e. the tail tile not including the mask values of the input). Such an elementwise operation is required for any layer which, due to the nature of the layer operation, could have its output influenced by the mask bits; otherwise, the elementwise operation is not required. For example, a softmax layer performed along an axis on which the data is padded requires an elementwise operation to apply suitable mask values at the input to the layer, but if a softmax layer is performed along another dimension, there is no need to include the elementwise operation.

With reference to Figure 15, consider an example in which the second layer operation is a convolution. In the manner illustrated in Figure 16 for the input mask to the first layer, the output mask of the first layer represents the elements of that output as a first data placeholder "a", which represents the elements of the input data 1536, 1534 and 1530 to the second layer, and a second mask placeholder "b", which represents the mask elements 1532 of the input data to the second layer. Since the second layer operation is a convolution, the data placeholder a = 1 and the mask placeholder b = 0. During operation of the tail network, by performing an elementwise multiplication of the fixed size output of the first layer (e.g. 1536 + 1534 + 1530 + 1532) with the output mask of the first layer in which the data placeholder a = 1 and the mask placeholder b = 0, the mask values 1532 of the input to the second layer may be appropriately set to 0 and the data values passed through unchanged. This ensures that the mask bits do not contaminate the multiplication calculations performed in the convolution operation of the second layer.

In some examples, an elementwise operation may be performed at the input of each layer of the network in order to appropriately set the mask values - i.e. the elementwise operation is performed prior to the operations of a layer so as to modify the input to the layer. In some examples, the elementwise operation may be performed at the output of each layer of the network in order to appropriately set the mask values for the operation(s) performed at each subsequent layer - i.e. the elementwise operation is performed following the operations of a layer so as to modify the output of the layer and provide a suitable input to the next layer. Each elementwise operation in the test implementation of the tail network may be considered to be, for example, an additional operation in a layer of the network and/or a new layer or intermediate operation between the layers of the network.

In some examples, the mask values of a subsequent layer will already be appropriately set and there is no need to perform an elementwise operation to appropriately prepare the mask values of the input to the subsequent layer. For example, in the case of consecutive convolution layers, all of the mask values output by the first convolution layer may be zeros such that the output of the first layer is suitable for provision to the second convolution layer with no elementwise operation being necessary.

Since the type of elementwise operation which is to be performed on the output of a layer depends on the operation(s) performed by the next layer, the mask values may change in value from one layer to the next. For example, if a convolution layer were to follow a softmax layer then the mask values would change from 0 to $-\infty$ from the convolution input to the software input.

The output mask for at least some of the layers of the tail network is determined for a set of tail tiles (or input masks) in the manner described prior to operation of the tail network in hardware. For example, on defining the tail network, the transformation unit 416 may be configured to identify one or more output masks for the layers of the tail network for each of a set of tail tiles (or input masks) representing the range of sizes of tail tile which can be input to the tail network. The output masks may be stored (e.g. in memory 410) for use when operating an implementation of the tail network on a given size of tail tile. Information representing the set of output masks may be stored in any suitable form for use at run time. For example, considering the output mask from the final layer, the length of the data values (e.g. 1524) for each of the possible sizes of tail tiles (e.g. 1512) may be stored and/or the length of the mask values (e.g. 1540) for each of the possible sizes of tail tiles (e.g. 1512) may be stored.

In order to enable a static tail network to operate on a variable size tail tile, the input at each layer of the network is appropriately padded with mask values which are selected appropriate to the operation(s) performed at that layer. Thus, at run time, an implementation of the static tail network in hardware may be operated on any of the set of sizes of tail tile by including the appropriate number of mask values 1528 in the fixed length input 1542 to the tail network. In some examples, an elementwise operation is not provided at the input to the first layer of the tail network. This is because any mask values added to the tail tile in order to achieve the fixed input size to the tail network may be added with the appropriate mask value for the first layer and so do not subsequently require setting to the appropriate mask value. For example, the transformation unit 416 may be configured to identify the appropriate mask value (e.g. a 0 for a convolution, $-\infty$ for a softmax operation) for the first layer of the tail network and store that information for use on performing an implementation of the tail network, but the transformation unit does not define an elementwise operation for the input to the first layer. On implementing a tail network at the NNA 402, the control logic 418 may be arranged to configure the NNA 402 using the stored information defining the appropriate mask value for the first layer, such that, on receiving a tail tile, the mask values added to the tail tile to achieve the fixed input size to the tail network are all of the appropriate mask value.

In other examples, an elementwise operation may be defined by the transformation unit for operation on the input to the first layer of the tail network in the manner described. In these examples, the control logic 418 may be configured to add any mask values to a tail tile in order to pad it out to the fixed input size because, in the manner which has been described, an elementwise operation will be performed on the input to the tail network so as to set the mask values to values appropriate for the operation(s) performed by the first layer.

The final output 1544 from the tail network may be handled in any suitable manner using the stored output mask information so as to retain only the useful elements of an output from the tail network. For example, the mask elements 1540 may be discarded on concatenating together the outputs from the static networks such that only the useful output 1524 of the tail network is concatenated with the outputs of the head and centre networks. This may be achieved by the control logic 418 causing the NNA 402 (e.g. its output buffer 408) to discard any mask elements of the output from the tail network in dependence on the stored mask output information. In some examples, the control logic may provide the NNA with access to the output mask information formed during transformation by the transformation unit. For example, the output mask information could be stored at on-chip memory 412 for use by an agent (e.g. a firmware process) running at the NNA 402, the agent being configured to discard the mask elements in dependence on the stored mask information indicating which elements of a tail network output are mask elements for a given input tail tile size. In some examples the mask elements of the tail network output may be discarded once the complete concatenated output from the set of static networks has been generated (e.g. at the output buffer 408, or subsequently when the output has been written out to memory 410).

Typically, an elementwise operation is not needed to operate on the final layer of the tail network because there is no subsequent layer requiring the mask values to be appropriately set so as to avoid contamination of the output data values. Thus, for example, the transformation unit may be configured to not add an elementwise operation after the final layer of the tail network. However, in some examples an elementwise operation may operate on the output of the final layer in the manner described.

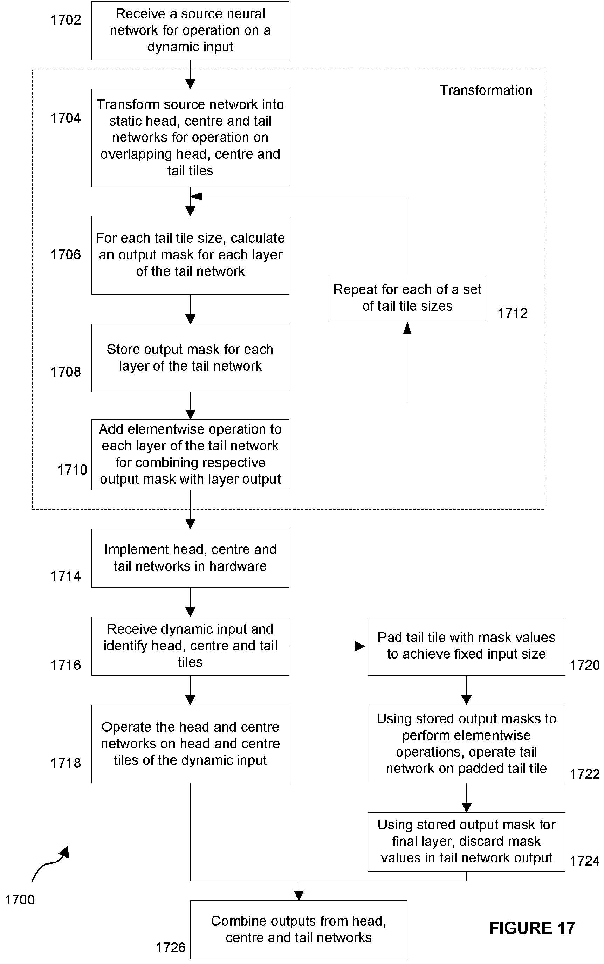

Figure 17 shows a flowchart 1700 illustrating an exemplary approach to implementing a dynamic network in hardware using masking in the tail tile. A received source network 1702 is transformed at step 1704 into head, centre and tail networks for operation on respective tiles in accordance with any of the principles described herein. Each of the networks is a static network for operation on a fixed size input. For each size of tail tile, an output mask is calculated for each of the layers of the tail network. As has been described, this may be achieved by considering the effect of the properties of each layer of the network in turn on a given size tail tile input to the first layer of the network. For instance, for a given size tail tile, the size of the corresponding output data (e.g. $T_0'$) from the first layer may be determined based on the properties of that first layer; similarly, the fixed size of the complete output (e.g. including mask values 1532) may be identified. The output mask is therefore known since the total length of the output has been identified and it has been determined which of the output elements are data values and which are mask values. In the same manner, the output mask of the second layer may be determined using the output mask of the first layer (which is the input to the second layer) and the properties of the second network layer, and so on until the output mask of each layer of the tail network 1706 has been determined through to the output mask of the final layer.

The output mask defined for each layer of the tail network may be stored 1708 - for example, at a memory 410 for use by a hardware implementation of the source neural network expressed as the head, centre and tail networks generated at 1704. Steps 1706 and 1708 are repeated 1712 for each of the set of tail tile sizes (or equivalently, for each of the input masks to the tail network) so as to generate a set of output masks for the layers of the tail network in respect of each of the set of tail tile sizes.

In order to ensure that the mask values used at the input to each layer are appropriate for the operations performed at the layer, an elementwise operation is defined in the manner described above for each layer of the tail network 1710.

If the elementwise operation is defined at the output of a network layer, the elementwise operation is adapted to, at runtime when the tail network operates on a given size tail tile, combine the respective output mask stored for the layer with the actual runtime output of the layer so as to set the mask value appropriate to the operations performed at the next layer of the network. For example, for a first layer which is followed by a convolution layer, the elementwise operation performed at the output of the first layer may be an elementwise multiplication of the elements of the first layer output with the first layer output mask for the given tail tile size, where the mask values are set to 0 and the non-mask values are set to 1.

If the elementwise operation is defined at the input of a network layer, the elementwise operation is adapted to, at runtime when the tail network operates on a given size tail tile, combine the respective output mask stored for the preceding layer with the actual runtime input to the layer so as to set the mask value appropriate to the operations performed at the layer of the network. For example, for a first layer which is followed by a convolution layer, the elementwise operation performed at the input to the second layer may be an elementwise multiplication of the elements of the first layer output with the first layer output mask for the given tail tile size, where the mask values are set to 0 and the non-mask values are set to 1.

As has been noted, not all layers of the network may need an elementwise operation to be added. Steps 1704-1712 may be performed by transformation unit 416.

The transformation approach described above allows a dynamic network to be implemented in hardware as a set of head, centre and tail networks, where the tail network is adapted to - using the output masks and additional elementwise operations - operate on a variable size tail tile from the dynamic input. The tail tile may therefore vary in size even though the tail network is adapted to operate on a fixed size input portion (e.g. equivalent to the size of the centre tile).

At step 1714, the head, centre and tail networks are implemented in hardware for operation on a sequence of overlapping head and centre tiles in accordance with any of the principles set out herein. At runtime, the head, centre and tail networks receive respective head, centre and tail tiles into which the dynamic input has been split 1716. Typically there will be a plurality of centre tiles and instances of the centre network for operation on those centre tiles. The tail network is implemented for operation on a tail tile from the dynamic input (i.e. the last portion of the dynamic input) which may take a range of values. By padding 1720 the tail tile with mask values, the fixed size input to the static tail network can be achieved. The mask values are set appropriate to the operation(s) performed at the first layer of the tail network.

The head and centre networks operate 1718 on their respective head and centre tiles. The tail network operates 1722 on its tail tile padded to achieve the necessary fixed size input. The elementwise operations at the layers of the modified tail network generated at step 1710 use the stored output masks for those layers which correspond to the size of the received tail tile (prior to its padding). For example, on receiving a dynamic input for operation at the hardware implementation of the neural network and splitting the input into respective head, centre and tail tiles, the control logic 418 may be configured to arrange that the set of stored output masks corresponding to the identified tail tile size are retrieved from memory 410 and provided to the implementation of the neural network for use by the elementwise operations of the tail network. For instance, the output masks may be provided from memory in an analogous manner to which weights are provided from memory to a convolution operation of a network layer at such a hardware implementation. Thus, the layers of the tail network are performed in the manner described herein, with each layer comprising an appropriate elementwise operation using the output mask stored for that layer and for the size of tail tile received at the input to the tail network.

At the final layer of the tail network, the output mask for the final layer may be used to indicate which elements of the final layer output are mask values which can be discarded 1724 such that the remaining elements represent the output of the tail network. In some examples, the tail network may include an operation after the final layer which discards mask elements in the final layer output in accordance with the output mask of the final layer. In some examples, the mask elements in the final layer output are implicitly discarded - for instance, in assembling the complete output of the neural network from the outputs of the head, centre and tail networks, the control logic 418 may be configured to read out only the non-mask elements of the tail network output in accordance with the final layer output mask corresponding to the size of tail tile input to the tail network.

By combining 1726 the outputs of the head, centre and tail networks, the output of the hardware implementation of the source neural network operated on the dynamic input may be identified.

The masking approach described herein may be used additionally or alternatively at the head and/or centre network so as to provide a head/centre network which can operate on a range of different head tile sizes. For example, the masking approach may be used at a head network to accommodate situations where the length of the dynamic input is less than the length of a full size head tile (e.g. 1508).

Generally, in order to properly handle the padding requirements of a source network, at a minimum the source network may be expressed as static head and tail networks according to the principles described herein. To ensure that both the head and tail networks are provided with head and tail tile data, the masking approach can be used at the head and tail networks to pad out parts of both the head and tail tiles with mask values. For example, the dynamic input can be split between the head and tail tiles with mask values prepended to the dynamic input in the head tile (and any necessary left padding) and mask values appended to the dynamic input in the tail tile (and any necessary right padding). The masking approach described herein may be performed for the head network at transformation so as to identify, for a range of possible sizes of head tile, the mask elements in the output of the head network. This precalculated mask information enables the head network to operate at run time on the range of possible sizes of head tile by prepending the head tile with an appropriate number of mask values in the manner described for a tail network.

The masking approach has been described for a single dynamic dimension but can be readily extended to two or more dynamic dimensions by performing the masking in each dynamic dimension.

General comments

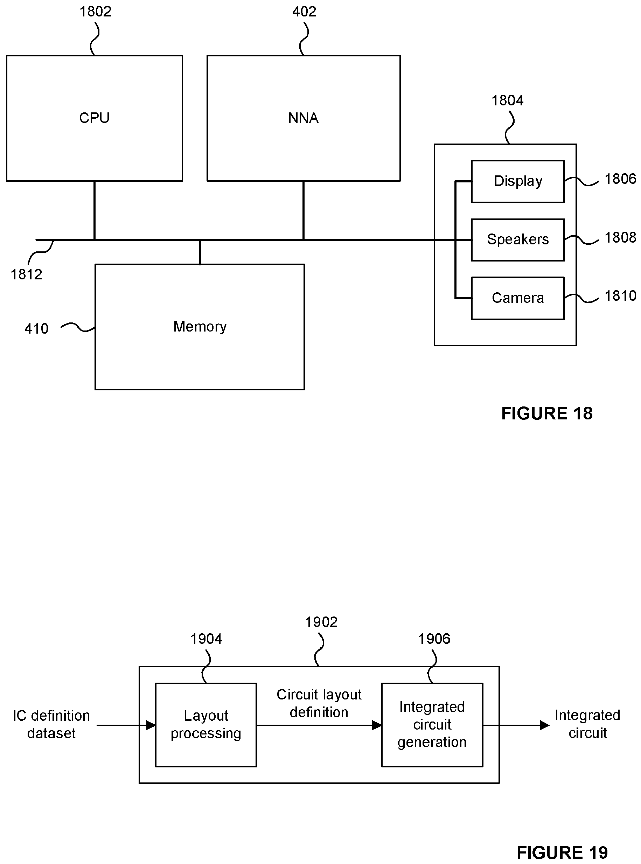

Figure 18 shows a computer system in which a data processing system as described herein may be implemented. The data processing system comprises a CPU 1802, an accelerator 402 (which is labelled in the figure as a neural network accelerator, NNA), a system memory 410 and other devices 1804, such as a display 1806, speakers 1808 and a camera 1810. The components of the computer system can communicate with each other via a data bus 1812. At least some of the control logic 418 and/or transformation unit 416 may be supported at the CPU 1802.

The systems of Figures 4, 18 and 19 are shown as comprising a number of functional blocks. This is schematic only and is not intended to define a strict division between different logic elements of such entities. Each functional block may be provided in any suitable manner. It is to be understood that intermediate values described herein as being formed by a computer system need not be physically generated by the computer system at any point and may merely represent logical values which conveniently describe the processing performed by the computer system between its input and output.

The accelerator described herein is embodied in hardware - for example, the accelerator may comprise one or more integrated circuits. The data processing system described herein may be configured to perform any of the methods described herein. Unless otherwise specified, the functions, methods, techniques or components described above can be implemented in software, firmware, hardware (e.g. fixed logic circuitry), or any combination thereof. The terms "module," "functionality," "component", "element", "unit", "block" and "logic" may be used herein to generally represent software, firmware, hardware, or any combination thereof. In the case of software, a module, functionality, component, element, unit, block or logic represents program code that performs the specified tasks when executed on a processor. Software described herein could be performed by one or more processors executing code that causes the processor(s) to perform the algorithms/methods embodied by that software. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in one or more of a machine language, an interpreted language, a scripting language, and a compiled high-level language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor to perform the tasks specified by the code.

A processor may be any kind of device, machine or dedicated circuit, or collection or portion thereof, with processing capability such that it can execute instructions. A processor may be any kind of general purpose or dedicated processor, such as a System-on-chip, an application-specific integrated circuit (ASIC), a programmable logic array, a field-programmable gate array (FPGA), or the like. A computing system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed in an integrated circuit manufacturing system configures the system to manufacture a computer system configured to perform any of the methods described herein, or to manufacture a computer system as described herein. An integrated circuit definition dataset may be, for example, an integrated circuit description.

There may be provided a method of manufacturing, at an integrated circuit manufacturing system, a computer system as described herein. There may be provided an integrated circuit definition dataset that, when processed in an integrated circuit manufacturing system, causes the method of manufacturing a computer system to be performed.

An integrated circuit definition dataset may be in the form of computer code, for example as a netlist, code for configuring a programmable chip, as a hardware description language defining an integrated circuit at any level, including as register transfer level (RTL) code, as high-level circuit representations such as Verilog or VHDL, and as low-level circuit representations such as OASIS (RTM) and GDSII. Higher level representations which logically define an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a computer system will now be described with respect to Figure 19.

Figure 19 shows an example of an integrated circuit (IC) manufacturing system 1902 which is configured to manufacture a computer system as described in any of the examples herein. In particular, the IC manufacturing system 1902 comprises a layout processing system 1904 and an integrated circuit generation system 1906. The IC manufacturing system 1902 is configured to receive an IC definition dataset (e.g. defining a computer system as described in any of the examples herein), process the IC definition dataset, and generate an IC according to the IC definition dataset (e.g. which embodies a computer system as described in any of the examples herein). The processing of the IC definition dataset configures the IC manufacturing system 1902 to manufacture an integrated circuit embodying a computer system as described in any of the examples herein.

The layout processing system 1904 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1906. A circuit layout definition may be, for example, a circuit layout description.

The IC generation system 1906 generates an IC according to the circuit layout definition, as is known in the art. For example, the IC generation system 1906 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1906 may be in the form of computer-readable code which the IC generation system 1906 can use to form a suitable mask for use in generating an IC.

The different processes performed by the IC manufacturing system 1902 may be implemented all in one location, e.g. by one party. Alternatively, the IC manufacturing system 1902 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a computer system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 19 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 19, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

Aspects of the disclosure are described in the following two sets of numbered clauses in terms of exemplary combinations of features.

Set 1:

1. A method of implementing in hardware a dynamic neural network comprising a dynamic subgraph for operation on an input tensor having a variable dimension and for providing an output of dynamic size in the variable dimension, the method comprising:

for each windowed layer of the dynamic subgraph:

calculating an input size for the layer required to generate an output of first predefined size from the dynamic subgraph, the input size calculated for the windowed layer closest to the input to the dynamic subgraph being a first fixed size in the variable dimension; and
identifying an overlap size for an input to the windowed layer, the overlap size identified for the layer closest to the input to the dynamic subgraph being an input overlap;

transforming the dynamic subgraph into a first static network adapted to operate on tiles of the first fixed size, the first static network being configured to perform operations which are equivalent to the operations performed by the dynamic subgraph on the input tensor; and
implementing an instance of the first static network in hardware for operation on a tile of the first fixed size derived from the input tensor, the implementing being performed such that, in operation for each of the windowed layers of the first static network, a portion of an input to the layer of the respective overlap size is maintained for use by the corresponding layer of an instance of a second static network operating on an adjacent tile derived from the input tensor, the instances of the first and second static networks being arranged for operation on adjacent tiles of a sequence of tiles overlapping by the input overlap, and the sequence of tiles collectively representing the input tensor.

2. The method of clause 1, wherein the calculating the input size for each windowed layer comprises:

starting at the final windowed layer of the dynamic subgraph closest to its output, calculating the input size for that final windowed layer which is required to generate the output of first predefined size from the dynamic subgraph; and
iteratively, over each successive windowed layer of the dynamic subgraph down to the first windowed layer of the dynamic subgraph closest to its input, calculating the input size for the layer which is required to generate an output size equal to the input size calculated for the preceding windowed layer closer to the output of the dynamic subgraph.

3. The method of clause 1 or 2, wherein the calculating the input size of each windowed layer is performed in dependence on one or more of the receptive field, kernel size, stride and paddings of that layer.

4. The method of any preceding clause, wherein the identifying an overlap size for a windowed layer is performed in dependence on the kernel size and stride of that windowed layer.

5. The method of any preceding clause, wherein the implementing is performed such that each tile of the sequence is provided to its respective instance of the first and second static networks with its input overlap(s).

6. The method of any preceding clause, wherein the instances of the first and second static networks are instances in a plurality of instances of static networks arranged for operation on respective tiles of the sequence of tiles into which the input tensor is split along its variable dimension, the method further comprising operating the plurality of instances of the static networks in hardware on the sequence of tiles so as to perform the dynamic subgraph on the input tensor.

7. The method of any preceding clause, wherein the first and second static network instances are instances of the same first static network.

8. The method of any preceding clause, wherein the first static network is a head network and the tile of the first fixed size is a head tile representing a beginning portion of the input tensor, and the transforming is performed such that the layers of the head network inherit left padding of the layers of the dynamic subgraph.

9. The method of clause 8, wherein the left padding of each layer of the dynamic subgraph is padding data prepended to the start of the input tensor to that layer in the variable dimension.

10. The method of any preceding clause, wherein the second static network is an instance of a centre network and the adjacent tile of the second fixed size is a centre tile representing a portion of the input tensor which is not a beginning portion or ending portion of the input tensor.

11. The method of clause 10, further comprising:

transforming the dynamic subgraph into the centre network adapted to operate on centre tiles, the centre network being configured to perform operations on each centre tile which are equivalent to the operations performed by the dynamic subgraph on its input tensor; and
implementing one or more instances of the centre network in hardware, each instance being arranged for operation on a respective centre tile of the sequence of tiles.

12. The method of clause 11, further comprising, for each windowed layer of the dynamic subgraph:
calculating an input size for the layer required to generate an output of a second predefined size from the dynamic subgraph, the input size for the windowed layer closest to the input to the dynamic subgraph being the second fixed size in the variable dimension.

13. The method of clause 12, further comprising:

for each windowed layer of the dynamic subgraph, repeating the calculating step for each of a set of one or more second predefined output sizes from the subgraph so as to determine a corresponding set of further second fixed sizes for the centre tile; and

transforming the representation of the dynamic subgraph into a further set of centre networks each adapted to operate on a respective centre tile having a second fixed size from the set of further second fixed sizes for the centre tile;

wherein the implementing one or more instances of the centre network in hardware is performed such that the one or more instances of the centre network includes one or more different centre networks selected from the second static network and the further set of centre networks, each instance of the centre network being arranged for operation on a respective centre tile of the sequence of tiles having a respective second fixed size selected from the second fixed size and the set of further second fixed sizes.

14. The method of clause 13, wherein the implementing one or more instances of the centre network in hardware is performed such that, in operation, the one or more instances of the centre network are selected from the second static network and the further set of centre networks in dependence on the size of the input tensor in the variable dimension.

15. The method of clause 14, wherein the selection is performed so as to minimise the number of the one or more instances of the centre networks.

16. The method of clause 14 or 15, wherein the first predefined size of any preceding clause is a power of two and/or the second predefined size(s) of any of clauses 12 to 15 is a power of two.

17. The method of any of clauses 1 to 9, wherein the second static network is a tail network and the adjacent tile of the second fixed size is a tail tile representing an ending portion of the input tensor, and the method further comprises:

transforming the representation of the dynamic subgraph into a tail network adapted to operate on the tail tile, the tail network being configured to perform operations on the tail tile which are equivalent to the operations performed by the dynamic subgraph on its input tensor, and the layers of the tail network inheriting right padding of the layers of the dynamic subgraph; and

implementing an instance of the tail network in hardware for operation on the tail tile representing an ending portion of an input tensor split into portions along in its variable dimension.

18. The method of clause 17, further comprising, for each windowed layer of the dynamic subgraph, calculating an input size for the layer required to generate an output of a second predefined size from the subgraph, the input size for the windowed layer closest to the input to the dynamic subgraph being the second fixed size of the tail tile.

19. The method of clause 17 or 18, wherein the right padding of each layer of the dynamic subgraph is padding data appended to the end of the input tensor to that layer in the variable dimension.

20. The method of any of clauses 17 to 19, wherein:

the transforming the representation of the dynamic subgraph into a tail network comprises transforming the representation of the dynamic subgraph into a set of tail networks each adapted to operate on a respective tail tile having one of a set of fixed sizes for the tail tile, including the second fixed size; and

the implementing the instance of the tail network in hardware comprises selecting one of the tail networks for implementation from the set of tail networks.

21. The method of clause 20, further comprising, for each windowed layer of the dynamic subgraph, repeating the calculating step for each of a set of second predefined output sizes from the dynamic subgraph so as to determine the set of fixed sizes for the tail tile.

22. The method of clause 20 or 21, wherein, the implementing is performed such that, in operation, the one of the tail networks is selected for implementation from the set of tail networks in dependence on the size of the input tensor in the variable dimension.

23. The method of any of clauses 20 to 22, wherein the instances of the first static network and tail network are instances in a plurality of instances of static networks arranged for operation on respective fixed size tiles of the sequence of tiles into which the input tensor is split along its variable dimension, and the tail network is selected for implementation so as to minimise a difference in the variable dimension between the size of the input tensor and the collective size of the fixed size tiles of the sequence.

24. The method of clause 23, wherein the selection is performed such that the collective size of the fixed size tiles of the sequence is at least as large as the size of the input tensor in the variable dimension.

25. The method of clauses 23 or 24, wherein the method further comprises operating the plurality of instances of the static networks in hardware on the sequence of tiles so as to perform the dynamic subgraph on the input tensor.

26. The method of clause 25, wherein the operating comprises, if the size of the dynamic input is smaller in the variable dimension than the collective size of the fixed size tiles of the sequence, padding the dynamic input so as to satisfy the fixed size of the tail tile on which the instance of the selected one of the tail networks operates.

27. The method of any preceding clause, wherein the second fixed size is the same as the first fixed size.

28. A data processing system for implementing a dynamic neural network comprising a dynamic subgraph for operation on an input tensor having a variable dimension and for providing an output of dynamic size in the variable dimension, the system comprising:
a transformation unit configured to:

for each windowed layer of the dynamic subgraph:

calculate an input size for the layer required to generate an output of first predefined size from the dynamic subgraph, the input size calculated for the windowed layer closest to the input to the dynamic subgraph being a first fixed size in the variable dimension; and
identify an overlap size for an input to the windowed layer, the overlap size identified for the layer closest to the input to the dynamic subgraph being an input overlap; and

transform the dynamic subgraph into a first static network adapted to operate on tiles of the first fixed size, the first static network being configured to perform operations which are equivalent to the operations performed by the dynamic subgraph on the input tensor; and
a hardware accelerator for processing neural networks; and
control logic configured to implement at the hardware accelerator an instance of the first static network for operation on a tile of the first fixed size derived from the input tensor, the implementing being performed such that, in operation for each of the windowed layers of the first static network, a portion of an input to the layer of the respective overlap size is maintained for use by the corresponding layer of an instance of a second static network operating on an adjacent tile derived from the input tensor, the instances of the first and second static networks being arranged for operation on adjacent tiles of a sequence of tiles overlapping by the input overlap, and the sequence of tiles collectively representing the input tensor.

29. A data processing system configured to perform the method of any of clauses 1 to 27.

30. Computer program code for performing a method as in any of clauses 1 to 27.

31. A non-transitory computer readable storage medium having stored thereon computer readable instructions that, when executed at a computer system, cause the computer system to perform the method as in any of clauses 1 to 27.

Set 2:

1. A method of implementing in hardware a neural network adapted for operation on a fixed input size, the implementation of the neural network being for operation on a variable size input having any of a plurality of network input sizes each no larger than the fixed input size, and the method comprising:

for each of the plurality of network input sizes:

calculating a corresponding set of output masks for the layers of the neural network, each output mask representing a size of the output from the respective layer; and

storing a representation of the output mask calculated for each layer of the neural network;

modifying the neural network to include an elementwise operation for each of the layers of the neural network, the elementwise operation being configured to, when an instance of the neural network is in operation on the variable size input, combine the output of the layer with the output mask calculated for that layer and the network input size, the elementwise operation being selected appropriate to the operation performed by the following layer of the neural network; and

implementing an instance of the modified neural network in hardware for operation on the variable size input padded to achieve the fixed input size, the implementing being performed such that, in operation, at least a part of the output of the final layer of the instance network is selected as the output of the network in dependence on the stored representation of the output mask calculated for the final layer and the network input size represented by the unpadded variable size input.

2. The method of clause 1, wherein the calculating the output mask for each layer of the neural network is performed in dependence on properties of the layer.

3. The method of clause 2, wherein the properties of the layer include one or more of kernel size, stride and padding.

4. The method of any proceeding clause, wherein the layers of the neural network include windowed layers of the neural network but not elementwise layers of the neural network such that the calculating is not performed for elementwise layers and an output mask is not stored for elementwise layers.

5. The method of any preceding clause, wherein the modifying is performed so as to not include an elementwise operation for the final layer of the modified neural network.

6. The method of any preceding clause, wherein, for each of the plurality of network input sizes, the output mask calculated for each layer of the neural network indicates mask elements output by the layer when the instance of the modified neural network operates on the variable size input padded to achieve the fixed input size.

7. The method of clause 6, wherein the mask elements output by each layer of the neural network are those elements which are generated as a consequence of including the padding values in the padded variable size input to the neural network.

8. The method of clause 6 or 7, wherein the elementwise operation is selected for each layer so as to, when the instance of the modified neural network operates on the padded variable size input, prevent contamination of the output of the following layer of the instance of the modified neural network by the mask elements provided at the input to that following layer.

9. The method of any of clauses 6 to 8, wherein the elementwise operation selected for each layer is configured to set the mask elements identified in the output of the layer by the output mask for the layer to mask values which, given the operation(s) performed by the following layer, will not corrupt the output of the following layer.

10. The method of clause 9, wherein:

if the following layer includes a softmax operation, the elementwise operation selected for the layer is an elementwise sum and the mask values are negative infinity; and
if the following layer includes a convolution operation, the elementwise operation selected for the layer is an elementwise multiplication and the mask values are zero.

11. The method of any of clauses 6 to 10, wherein the mask elements of each output mask are contiguous and located at the start and/or end of the output mask.

12. The method of any preceding clause, wherein the implementing is performed such that, in operation, those element(s) of the output of the final layer of the instance of the modified neural network are discarded which correspond to the mask elements of the output mask of the final layer.

13. The method of any preceding clause, wherein the implementing is performed so as to, in operation, discard those element(s) of the output of the final layer of the instance of the modified neural network which are not selected as the output of the instance of the modified neural network.

14. The method of any preceding clause, wherein the plurality of network input sizes includes the fixed input size and the output masks calculated for the fixed input size for each layer represent a fixed size output of each layer.

15. The method of any preceding clause, wherein the output masks calculated for each network input size smaller than the fixed input size indicate which elements of the fixed size output of the layer are mask elements.

16. The method of any preceding clause, wherein the layers of the neural network are those layers of the neural network which include a windowed operation.

17. The method of any preceding clause, wherein the implementing is performed such that, on the instance of the modified neural network operating on the padded variable size input, the padding data of the padded variable size input is selected appropriate to the operation performed by the first layer of the neural network.

18. The method of any preceding clause, wherein the storing each representation of the output mask is performed so as to associate the output mask with the respective layer of the neural network and the respective network input size.

19. The method of any preceding clause, further comprising operating the hardware implementation of the instance of the modified neural network on the variable size input by:

padding the variable size input to achieve the fixed input size;
accessing the stored representations of the output masks corresponding to the network input size represented by the variable size input;
performing the instance of the modified neural network on the padded variable size input, including performing the elementwise operation for each of the layers of the instance of the modified neural network so as to combine the output of the layer with the output mask calculated for that layer and the network input size represented by the variable size input; and
in dependence on the stored representation of the output mask for the final layer of the network, selecting part of the output of the final layer of the instance of the modified neural network as the output of the network.

20. The method of clause 19, wherein the padding is performed using padding data selected appropriate to the operation performed by the first layer of the neural network.

21. The method of clause 20, wherein, the padding data is:

if the first layer includes a softmax operation, negative infinity; and
if the first layer includes a convolution operation, zero.

22. The method of any preceding clause, wherein the modifying the neural network to include the elementwise operation for each of the layers of the neural network is performed so as to:

include the elementwise operation as an operation on the output of the layer; and/or
include the elementwise operation as an operation on the input to the following layer.

23. The method of any preceding clause, wherein the neural network includes one or more windowed layers and the method further comprises, for each windowed layer of the neural network:

starting at the final windowed layer of the neural network closest to its output, calculating the input size for that final windowed layer which is required to generate an output of predefined size from the neural network; and
iteratively, over each successive windowed layer of the neural network down to the first windowed layer of the neural network closest to its input, calculating the input size for the layer which is required to generate an output size equal to the input size calculated for the windowed layer closer to the output of the neural network;

wherein the input size to the first windowed layer is the fixed input size.

24. The method of clause 23, wherein the calculating an input size of each windowed layer is performed in dependence on one or more of the receptive field, kernel size, stride and paddings of that layer.

25. The method of any preceding clause, further comprising:

receiving a dynamic neural network for operation on an input tensor having a variable dimension; and transforming the representation of the dynamic neural network into the neural network adapted to operate on a fixed input size and to perform operations on the fixed input size which are equivalent to operations performed by the dynamic neural network on its input tensor.

26. The method of clause 25, wherein the implementing comprises implementing in hardware a plurality of instances of the neural network arranged collectively for operation on the input tensor, the input tensor being split along its variable dimension into the variable size input and a sequence of overlapping input portions each of the fixed input size, and:

the plurality of instances of the neural network are arranged to operate on respective input portions; and the instance of the modified neural network is arranged to operate on the variable size input padded to achieve the fixed input size.

27. The method of clause 25 or 26, further comprising operating (a) the plurality of instances of the neural network in hardware on the sequence of overlapping input portions and (b) the instance of the modified neural network on the variable size input so as to perform the dynamic neural network on the input tensor.

28. The method of clause 26 or 27, wherein the overlapping input portions of the fixed input size and the variable size input are collectively equal in size to the input tensor.

29. A data processing system for implementing a neural network adapted for operation on a fixed input size, the implementation of the neural network being for operation on a variable size input having any of a plurality of network input sizes each no larger than the fixed input size, and the system comprising:

a transformation unit configured to:

for each of the plurality of network input sizes:

calculate a corresponding set of output masks for the layers of the neural network, each output mask representing a size of the output from the respective layer; and store a representation of the output mask calculated for each layer of the neural network; and

modify the neural network to include an elementwise operation for each of the layers of the neural network, the elementwise operation being configured to, when an instance of the neural network is in operation on the variable size input, combine the output of the layer with the output mask calculated for that layer and the network input size, the elementwise operation being selected appropriate to the operation performed by the following layer of the neural network;

a hardware accelerator; and control logic configured to implement an instance of the modified neural network at the hardware accelerator for operation on the variable size input padded to achieve the fixed input size;

the control logic being arranged to configure the implementation of the network such that, in operation, at least a part of the output of the final layer of the instance of the modified neural network is selected as the output of the network in dependence on the stored representation of the output mask calculated for the final layer and the network input size represented by the unpadded variable size input.

30. The system of clause 29, wherein the transformation unit is further configured to transform a representation of a dynamic neural network into the neural network adapted to operate on a fixed input size and to perform operations on each fixed input size which are equivalent to the operations performed by the dynamic neural network on its input tensor.

31. A data processing system configured to perform the method of any of clauses 1 to 28.

32. Computer program code for performing a method as in any of clauses 1 to 28.

33. A non-transitory computer readable storage medium having stored thereon computer readable instructions that, when executed at a computer system, cause the computer system to perform the method as in any of clauses 1 to 28.

**Claims**

1.  A method of implementing in hardware a dynamic neural network for operation on an input tensor having a variable dimension, the method comprising:

    receiving a representation of the dynamic neural network;
    transforming the representation of the dynamic neural network into a static network adapted to operate on a fixed size input, the static network being adapted to perform operations on the fixed size input which are equivalent to the operations performed by the dynamic neural network on its input tensor; and
    implementing a plurality of instances of the static network in hardware for operation on an input tensor split into a sequence of overlapping fixed size inputs along its variable dimension, each instance of the static network being arranged to operate on a respective fixed size input of the sequence.

2.  The method of claim 1, wherein the implementing includes defining a combination operation arranged to combine the output of each instance of the static network so as to provide an output of the dynamic neural network operated on the input tensor.

3.  The method of any preceding claim, wherein each of the fixed size inputs of the sequence of overlapping fixed size inputs is the same size.

4.  The method of any preceding claim, wherein the transforming comprises selecting the size of the overlap between the overlapping fixed size inputs of the sequence in dependence on the receptive field of the first layer of the static network.

5.  The method of any preceding claim, wherein the transforming comprises selecting the size of the fixed size input in dependence on the characteristics of the hardware.

6.  The method of any preceding claim, wherein the static network includes the same set of layers as the dynamic neural network, the layers of the dynamic neural network representing the operations performed by the dynamic neural network.

7.  The method of any preceding claim, wherein the dynamic neural network is for operation on an input tensor having a plurality of variable dimensions and the fixed size input is fixed in size in respect of each of the variable dimensions, the plurality of instances of the static network being for operation on an input tensor split along each of variable dimensions into a sequence of overlapping fixed size inputs.

8.  The method of claim 7, wherein the transforming comprises selecting the size of the fixed size input and/or the size of the overlap in respect of each of the variable dimensions independently of selecting the size of the fixed size input and/or the size of the overlap in respect of the other variable dimensions of the plurality of variable dimensions.

9.  The method of any preceding claim, wherein the transforming comprises, prior to forming the static network:

    determining whether padding of the layers of the dynamic neural network may be propagated into the input tensor whilst satisfying the receptive field of each layer of the dynamic neural network; and
    if the determination is positive, propagating the padding of the layers of the static network into the fixed size input to the static network;
    wherein the determination is performed if the dynamic neural network does not introduce padding between layers of the dynamic network and is otherwise not performed.

10. The method of any preceding claim, wherein the implementing is performed such that the overlaps of each fixed size input to each of the instances of the static network are shared with the fixed size inputs to adjacent instances of the static network for operation on the sequence of overlapping fixed size inputs, but that inputs to layers of the instances of the static network subsequent to the first layer are not shared with the respective layers of adjacent instances of the static network.

11. The method of any preceding claim, wherein:

the transforming comprises:

defining a head network for operation on the first fixed size input of a sequence of overlapping fixed size inputs, each layer of the head network inheriting the left padding of the corresponding layer of the dynamic neural network, the head network being configured to perform operations on the first fixed size input which are equivalent to the operations performed by the dynamic neural network on its input tensor; and/or
defining a tail network for operation on the last fixed size input of a sequence of overlapping fixed size inputs, each layer of the tail network inheriting the right padding of the dynamic neural network, the tail network being configured to perform operations on the last fixed size input which are equivalent to the operations performed by the dynamic neural network on its input tensor;

and the implementing in hardware comprises:

implementing an instance of the head network for operation on the first fixed size input of the sequence of overlapping fixed size inputs; and/or
implementing an instance of the tail network for operation on the last fixed size input of the sequence of overlapping fixed size inputs.

12. The method of claim 11, wherein a tail network is not defined if the input tensor represents a streamed input of indeterminate length.

13. A data processing system for implementing a dynamic neural network for operation on an input tensor having a variable dimension, the system comprising:

a transformation unit configured to receive a representation of the dynamic neural network and transform the representation into a static network adapted to operate on a fixed size input, the static network being configured to perform operations on the fixed size input which are equivalent to the operations performed by the dynamic neural network on its input tensor;
a hardware accelerator for processing neural networks; and
control logic configured to implement a plurality of instances of the static network at the hardware accelerator for operation on an input tensor split into a sequence of overlapping fixed size inputs along its variable dimension, each instance of the static network being arranged to operate on a respective fixed size input of the sequence.

14. The system of claim 13, wherein the hardware accelerator and the control logic are adapted to perform feed-forward neural networks on input tensors of fixed size.

15. Computer program code for performing a method as claimed in any of claims 1 to 13.

(a)

fixed size output ⌇ 108

100

FC ⌇ 113

max reduce ⌇ 111

112

conv ⌇ 110

dynamic input ⌇ 101

(b)

fixed size output ⌇ 108

static graph ⌇ 107

combination ⌇ 106

104 ⌇ | static instance 0 | static instance 1 | static instance 2 | •••

103 ⌇ tensor(0)    tensor(1)    tensor(2)    •••

dynamic input ⌇ 101

FIGURE 1

**FIGURE 2**

FIGURE 3

EP 4 404 102 A1

FIGURE 4

FIGURE 5

FIGURE 6

FIGURE 7

FIGURE 8(a)

FIGURE 8(b)

**FIGURE 9**

EP 4 404 102 A1

FIGURE 10

FIGURE 11

1202 — Receive a source neural network having a dynamic input

**Transformation**

1204 — Determine overlap based on receptive fields of layers in source network

1206 — Internal padding?

No — 1208 — Propagate padding from layers of source network to fixed length input

Yes — 1210 — Define head and/or tail static networks to handle padding at the layers of the source network

1212 — Transform the source network into one or more static networks adapted to operate on fixed length inputs

1214 — Implement instances of the static network (and head/tail networks) for operation on overlapping inputs of the fixed length

1216 — Split a dynamic input into a plurality of overlapping fixed length inputs

1218 — Operate the static network instances on the fixed length inputs

1200

1220 — Combine the outputs of the static network instances to provide an output of the source network operated on the dynamic input

**FIGURE 12**

1302 — Receive a source neural network having a dynamic input

Transformation

1304 — Identify dynamic and static subgraphs of the source network

1306 — Transform each dynamic subgraph into a static network adapted to operate on a fixed length input

1308 — Extract static subgraph

1310 — Define operation for combining outputs from reduction layer of instances of static network into an input for static subgraph

1312 — Implement instances of the static network for operation on overlapping inputs of the fixed length

1300

1314 — Perform operation to combine the outputs of the instances of the static network

1316 — Operate the static subgraph on the combined outputs to provide an output of the source network on the dynamic input

**FIGURE 13**

1402 — Receive a source neural network having a dynamic input

1404 — Identify left and right padding and overlap for each windowed layer of the source network

1406 — Identify head tile size by calculating input size corresponding to desired output size from static head network

1408 — Identify centre tile size by calculating input size corresponding to desired output size from static centre network

1410 — Identify tail tile size by calculating input size corresponding to desired output size from static tail network

1412 — Transform the source network into static head, centre and tail networks for operation on respective head, centre and tail tiles

Transformation

1414 — Implement the head network, instances of the centre network, and tail network

1400

1416 — Split a dynamic input into a head tile, zero or more centre tiles, and a tail tile

1418 — Operate the head, centre and tail networks on the head, centre and tail tiles

1420 — For each instance, hold overlap at each layer for use in that layer of next instance

1422 — Combine the outputs of the head, centre and tail networks to provide an output of the source network operated on the dynamic input

FIGURE 14(a)

50

**1452** Identify a desired output size for the static network

**1454** Identify final windowed layer in source network as subject layer and desired output size as layer output size

**1456** In dependence on overlap and, for head/tail networks, the left/right padding of subject layer, calculate input size for the subject layer required to generate the layer output size

**1458** Identify preceding windowed layer as subject layer and calculated input size of previous subject layer as the layer output size

**1460** Preceding windowed layer exists closer to source network input?

Yes

No

**1462** Identify calculated input size of windowed layer closest to source network input as size of input tile for the static network

**1450**

**FIGURE 14(b)**

FIGURE 15

FIGURE 16

**1702** — Receive a source neural network for operation on a dynamic input

**Transformation**

**1704** — Transform source network into static head, centre and tail networks for operation on overlapping head, centre and tail tiles

**1706** — For each tail tile size, calculate an output mask for each layer of the tail network

**1712** — Repeat for each of a set of tail tile sizes

**1708** — Store output mask for each layer of the tail network

**1710** — Add elementwise operation to each layer of the tail network for combining respective output mask with layer output

**1714** — Implement head, centre and tail networks in hardware

**1716** — Receive dynamic input and identify head, centre and tail tiles

**1720** — Pad tail tile with mask values to achieve fixed input size

**1718** — Operate the head and centre networks on head and centre tiles of the dynamic input

**1722** — Using stored output masks to perform elementwise operations, operate tail network on padded tail tile

**1724** — Using stored output mask for final layer, discard mask values in tail network output

**1700**

**1726** — Combine outputs from head, centre and tail networks

**FIGURE 17**

1802    402

CPU    NNA

1804

Display — 1806

Speakers — 1808

Camera — 1810

1812

410    Memory

**FIGURE 18**

1902

1904    1906

IC definition
dataset → Layout
processing → Circuit layout
definition → Integrated
circuit
generation → Integrated
circuit

**FIGURE 19**

Europäisches
Patentamt

European
Patent Office

Office européen
des brevets

# EUROPEAN SEARCH REPORT

**Application Number**

EP 23 21 5380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 035 916 A (CAMBRICON SINGGO NANJING TECHNOLOGY CO) 11 February 2022 (2022-02-11) * paragraph [0046] - paragraph [0093] * * figures 1-5 * | 1-15 | INV. G06N3/063 G06N3/0464 |
| A | Haichen Shen: "Nimble: Efficiently Compiling Dynamic Neural Networks for Model Inference", arXiv.org, 12 March 2021 (2021-03-12), XP093158875, Ithaca DOI: 10.48550/arxiv.2006.03031 Retrieved from the Internet: URL:https://proceedings.mlsys.org/paper_files/paper/2021/file/5b47430e24a5a1f9fe21f0e8eb814131-Paper.pdf * Sections 1-3 * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 12 June 2024 | Baldan, Marco |

EPO FORM 1503 03.82 (P04C01)

## ANNEX TO THE EUROPEAN SEARCH REPORT
## ON EUROPEAN PATENT APPLICATION NO.

EP 23 21 5380

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2024

| Patent document cited in search report | Publication date | Patent family member(s) | Publication date |
|---|---|---|---|
| CN 114035916 A | 11-02-2022 | CN 114035916 A | 11-02-2022 |
| | | WO 2023071238 A1 | 04-05-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2218777 A
- GB 2218779 A

- GB 2218778 A